(19) Europäisches Patentamt
European Patent Office
Office européen des brevets

(11) EP 2 221 839 B2

(12) NEW EUROPEAN PATENT SPECIFICATION
After opposition procedure

(45) Date of publication and mention of the opposition decision:
**24.05.2017 Bulletin 2017/21**

(45) Mention of the grant of the patent:
**09.10.2013 Bulletin 2013/41**

(21) Application number: **10003488.3**

(22) Date of filing: **09.08.2001**

(51) Int Cl.:
***H01G 9/052*** *(2006.01)* ***H01G 9/042*** *(2006.01)*
***C22C 1/04*** *(2006.01)*

# (54) Niobium powder, sintered body and capacitor using the body

Niobpulver, gesinterter Körper und Kondensator mit dem Körper

Poudre de niobium, corps fritté et condensateur utilisant le corps

(84) Designated Contracting States:
**AT BE CH CY DE DK ES FI FR GB GR IE IT LI LU MC NL PT SE TR**

(30) Priority: **10.08.2000 JP 2000243486**
**19.12.2000 JP 2000384720**
**09.03.2001 JP 2001065852**
**08.06.2001 JP 2001174018**

(43) Date of publication of application:
**25.08.2010 Bulletin 2010/34**

(62) Document number(s) of the earlier application(s) in accordance with Art. 76 EPC:
**01955623.2 / 1 324 359**

(73) Proprietor: **SHOWA DENKO K.K.**
**Minato-ku, Tokyo (JP)**

(72) Inventors:
- **Omori, Kazuhiro**
**Minato-ku,**
**Tokyo (JP)**
- **Naito, Kazumi**
**Minato-ku,**
**Tokyo (JP)**

(74) Representative: **Strehl Schübel-Hopf & Partner**
**Maximilianstrasse 54**
**80538 München (DE)**

(56) References cited:
**EP-A1- 1 093 137** **EP-A1- 1 202 301**
**EP-A1- 1 204 126** **WO-A1-00/56486**
**WO-A1-00/67936** **WO-A1-01/26852**
**WO-A1-98/19811** **WO-A1-98/49356**
**DE-A1- 19 847 012** **DE-A1- 19 953 946**
**GB-A- 1 162 709** **GB-A- 1 283 689**
**JP-A- 2000 243 486** **US-A- 5 448 447**
**US-A- 5 729 428**

- **GUPTA C.K. ET AL: 'Preparation of high purity niobium' JOURNAL OF THE LESS-COMMON METALS vol. 139, 01 April 1988, pages 189 - 202**
- **KAMAT G.R. ET AL: 'Open Aluminothermic Reduction of Columbium (Nb) Pentoxide and Purification of the Reduced Metal' METALLURGICAL TRANSACTIONS vol. 2, October 1971, pages 2817 - 2823**
- **HÖRMANN M.: 'Production of High Thermal Conductivity Niobium on a technical scale for High-Frequency Superconductivity' JOURNAL OF THE LESS-COMMON METALS vol. 139, no. 1, April 1988, pages 1 - 14**
- **SCHWARTZ N.: 'Niobium Solid Electrolytic Capacitors' JOURNAL OF THE ELECTROCHEMICAL SOCIETY vol. 108, no. 8, August 1961, pages 750 - 758**
- **HD 403279, Kemet Department Linde Company, Progress Report Third Quarter, 01.01.1963 - 31.03.1963**
- **GROENENDAAL L.B. ET AL: 'Poly(3,4-ethylendioxythiophene) and Its Derivatives: Past, Present, and Future**' ADVANCED MATERIALS vol. 12, no. 7, 2000, pages 481 - 494**
- **BOWEN P.: 'Particle Size Distribution Measurement from Millimeters to Nanometers and from Rods to Platelets' JOURNAL OF DISPERSION SCIENCE AND TECHNOLOGY vol. 23, no. 5, 2002, pages 631 - 662**



Printed by Jouve, 75001 PARIS (FR)

(Cont. next page)

- **ELVERS B. ET AL: 'Ullmann's Encyclopedia of Industrial Chemistry', vol. A23, 1993, VCH VERLAGSGESELLSCHAFT MBH, WEINHEIM pages 199 - 204**
- **KLOBES P. ET AL: '960-17 Porosity and Specific Surface Area Measurements for Solid Materials', 01 September 2006 pages 1 - 79**
- **DIN ISO 9277 :2010, Bestimmung der spezifischen Oberfläche von Festkörpen mittels Gasdsorbtion - BET - Verfahren**

## Description

### Technical Field

The present invention relates to a niobium powder with a large capacitance per unit mass and good leakage current characteristics, a sintered body using the above-mentioned niobium powder, and a capacitor using the above-mentioned sintered body.

### Background Art

Capacitors for use in electronic apparatus such as portable telephones and personal computers are required to be small in size and large in capacitance. Of those capacitors, a tantalum capacitor is preferably used, because the capacitance is large, not in proportion to the size, and the tantalum capacitor also has good characteristics. The tantalum capacitor usually employs a sintered body of a tantalum powder as an anode. In order to increase the capacitance of the tantalum capacitor, it is necessary to increase the mass of the sintered body, or to use a sintered body having an increased surface area obtained by pulverizing the tantalum powder.
The increase in mass of the sintered body inevitably enlarges the shape, so that the requirement for a small-sized capacitor is not satisfied. On the other hand, when the tantalum powder is finely pulverized to increase the specific surface area, the pore size in the tantalum sintered body decreases, and the number of closed pores increases during the sintering step. The result is that the sintered body cannot be easily impregnated with a cathode agent in the subsequent step.
One approach to solve these problems is a capacitor using a sintered body of a powder material which has a greater dielectric constant than the tantalum powder. One powder material, which has such a greater dielectric constant is a niobium powder.
Japanese Laid-Open Patent Application No. 55-157226 discloses a method for producing a sintered element for a capacitor. This method comprises the steps of subjecting a niobium powder ranging from an agglomerate to fine particles with a particle diameter of 2. 0 μm or less to pressure molding and sintering, finely cutting the molded sintered body, connecting a lead portion to the finely cut particles of the sintered body, and thereafter sintering the connected body. However, the above-mentioned application does not describe the detailed characteristics of the obtained capacitor.
United States Patent No. 4, 084, 965 discloses a capacitor using a sintered body of a niobium powder with a particle size of 5.1 μm obtained from a niobium ingot through hydrogenation and pulverizing. The capacitor disclosed has, however, a high leakage current value (hereinafter referred to as an LC value), and therefore the serviceability is poor.
As disclosed in Japanese Laid-Open Patent Application No. 10-242004, the LC value is improved by partially nitriding a niobium powder. However, when a capacitor having a large capacitance is produced using a sintered body of a niobium powder with a smaller particle diameter, the LC value of the obtained capacitor may become exceptionally high.
United States Patent No. 6, 051, 044 discloses a niobium powder which has a particular BET specific surface area and contains nitrogen in a particular amount. A method for decreasing the leakage current is also disclosed. However, there is no disclosure nor suggestion concerning a niobium powder containing another element which can form an alloy with niobium. Furthermore, this patent does not disclose nor suggest the heat resistance necessary for capacitors in soldering and the like or stability of LC value against thermal history.
DE 198 47 012 A1 discloses niobium powder used for capacitors and containing at least one of the elements nitrogen, phosphorus, boron and sulfur.

### Disclosure of Invention

An object of the present invention is to provide a niobium powder capable of providing a capacitor having good heat resistance with a large capacitance per unit mass and a small leakage current value, a sintered body using the above-mentioned niobium powder, and a capacitor using the above-mentioned sintered body.
Through intense studies of the above-mentioned problems, the inventors of the present invention have found that a low LC value and good heat resistance can be maintained even in a capacitor provided with a large capacitance by decreasing the particle diameter of a niobium powder when at least one element selected from various elements which can form an alloy with niobium is added to niobium. The present invention has thus been accomplished. The term "alloy" in the present application includes a solid solution with the other alloy components. The term "ppm" and "%" in the present application mean "ppm by mass" and "% by mass" respectively unless explained otherwise.
The present invention is defined in the claims.

Detailed Description of The Invention

(1) The First Group (Niobium Powder and Sintered body) (Reference only)

The first group relates to a niobium powder and a sintered body thereof, wherein the niobium powder contains at least one element selected from the transition elements of group 6 in the periodic table, that is, chromium, molybdenum, and tungsten.

Chromium, molybdenum, and tungsten are elements that can form an alloy with niobium. The most effective for lowering the leakage current value is tungsten, while molybdenum and chromium follow in that order. It is therefore most preferable that the niobium powder of the first group contains tungsten. Such a tungsten-containing niobium powder may further comprise molybdenum and/or chromium, preferably chromium. The total amount of these elements may be 10 mol% or less, preferably in the range of 0.01 mol% to 10 mol%, more preferably in the range of 0.1 mol% to 7 mol% in the niobium powder.

According to the present invention, it is preferable to use a sintered body of a niobium powder for a capacitor, with the niobium powder containing at least one element selected from the group consisting of chromium, molybdenum, and tungsten in an amount of 10 mol% or less, more preferably in the range of 0.01 mol% to 10 mol% of the niobium powder.

If the content of the above-mentioned element is less than 0.01 mol%, it is impossible to inhibit the tendency whereby oxygen in a dielectric film formed by electrolytic oxidation, to be described later, is apt to diffuse into the niobium metal side. Consequently, the stability of a film obtained by electrolytic oxidation, i.e., dielectric film, cannot be maintained, so that the LC value cannot be effectively lowered. If the content of the above-mentioned element is more than 10 mol%, the amount of niobium itself in the niobiumpowder decreases. As a result, the capacitance of the capacitor decreases.

In light of the above, the most preferable amount of at least one element selected from the group consisting of chromium, molybdenum, and tungsten is in the range of 0.01 to 10 mol%. In order to further reduce the leakage current value, it is preferable that the above-mentioned element be contained in an amount of 3 mol% or less, and more preferably in the range of 0.05 to 3 mol% in the niobium powder.

It is preferable that the niobium powder have a mean particle size (mean particle diameter) of 5 μm or less, and more preferably 4 μm or less to increase the specific surface area of the powder. Most preferably, the mean particle diameter of the niobium powder may be 0.2 μm or more and 5 μm or less. The reason for this is as follows.

The capacitance C of a capacitor is generally expressed by the following equation:

$$C = \varepsilon \times (S/d),$$

wherein C represents the capacitance, ε represents the dielectric constant, S represents the specific surface area, and d represents the distance between electrodes.

Since d = k x V, wherein k is a constant and V represents the forming voltage, C = e x (S/(k x V)); hence, it follows that C x V = (ε/k) x S.

In view of the equation, the capacitance of the capacitor can be increased merely by increasing the specific surface area. Assuming that the niobium powder has a spherical shape, the smaller the particle diameter of the niobium powder, the larger the capacitance of the obtained capacitor. However, in fact, the niobium powder is not in a completely spherical shape, and occasionally contains flake-shaped particles.

As described above, the characteristics required for the capacitor are not only a large capacitance but also good leakage current properties. This cannot be achieved simply by enlarging the specific surface area of the powder.

By using a niobium powder containing at least one element selected from the group consisting of chromium, molybdenum, and tungsten as a raw material to produce a sintered body, it becomes possible to provide a capacitor capable of satisfying both the above-mentioned capacitor characteristics, and a niobium sintered body that can provide such capacitor characteristics.

TABLE 1 shows the particle diameter and the specific surface area of respective tungsten-containing niobium powders which the inventors of the present invention prepared through pulverizing as one embodiment.

TABLE 1

| Mean Particle Size ($D_{50}$) | Specific Surface Area (S) |
|---|---|
| 5 μm | 0.6 $m^2/g$ |
| 2 μm | 1.3 $m^2/g$ |
| 0.9 μm | 2.3 $m^2/g$ |
| 0.5 μm | 4.2 $m^2/g$ |

(continued)

| Mean Particle Size ($D_{50}$) | Specific Surface Area (S) |
|---|---|
| 0.2 μm | 10.0 $m^2/g$ |
| 0.1 μm | 20.8 $m^2/g$ |
| 0.05 μm | 38.8 $m^2/g$ |

The mean particle size herein used is a value $D_{50}$, which represents a particle diameter, measured using a particle size distribution measuring apparatus "Microtrac" (trademark), made by Microtrac Corporation, when the mass percentage reaches 50% by cumulative distribution by mass. The specific surface area is a value measured by the BET method.

When the mean particle size of the niobium powder containing at least one element selected from the group consisting of chromium, molybdenum, and tungsten is less than 0.05 μm, a sintered body made from the niobium powder has a small pore size and has many closed pores. Therefore, there is a tendency for the sintered body to be not easily impregnated with an agent for cathode as described later. The result is that the capacitance of the obtained capacitor cannot be increased, and therefore, the above-mentioned sintered body is not suitable for capacitors. When the mean particle size exceeds 5 μm, a large capacitance cannot be obtained.

In light of the above-mentioned points, a large capacitance can be obtained by employing a niobium powder preferably having a mean particle size of 0.05 μm or more and 5 μm or less.

It is preferable that the niobium powder have a BET specific surface area of at least 0.5 $m^2/g$, more preferably at least 1.0 $m^2/g$, and further preferably at least 2.0 $m^2/g$. In addition, it is preferable that the niobium powder be a powder with a BET specific surface area of 0.5 to 40 $m^2/g$, more preferably 1 to 20 $m^2/g$, and particularly preferably 1 to 10 $m^2/g$.

It is known that the dielectric constant (ε) of niobium is about two times greater than that of tantalum. However, it is not known whether chromium, molybdenum, or tungsten is a valve metal that is one of the capacitor characteristics. Therefore it has not been known that the dielectric constant ε of the niobium powder containing at least one element selected from the group consisting of chromium, molybdenum, and tungsten will increase.

When the niobium powder containing at least one element selected from the group consisting of chromium, molybdenum, and tungsten is controlled to have a small mean particle size and is made into a sintered body with a large capacitance, as mentioned above, there is no peculiar increase in the LC value.

This action is assumed to be as follows. The bonding strength between niobium and oxygen is greater than that between tantalum and oxygen. Therefore, oxygen in a film prepared by electrolytic oxidation, i.e., a dielectric film, tends to diffuse into the side of a niobium metal. However, because part of the niobium and at least one element of chromium, molybdenum, or tungsten are bonded together in the sintered body, there is less chance for oxygen in the electrolytic oxidation film to be bonded to niobium, thereby preventing oxygen from diffusing into the metal.

As a result, it is possible to maintain the stability of the electrolytic oxidation film, and therefore, it is considered that the effect of decreasing the LC value and minimizing the dispersion of the LC value can be obtained in a capacitor with a high capacitance prepared from the niobium powder with a small particle diameter.

An example (reference only) will now be described by taking tungsten as an example of the transition elements of the group 6 in the periodic table. The description is not limited to this example, but also applies to the case where chromium or molybdenum is used.

It is particularly preferable that the tungsten-containing niobium powder used to prepare a sintered body have a mean particle size of 0.2 μm or more and 5 μm or less as mentioned above.

The tungsten-containing niobium powder having such a mean particle size can be prepared from, for example, a hydride of a niobium - tungsten alloy in the form of an ingot, pellet, or powder through pulverizing and dehydrogenation. Alternatively, a niobium powder prepared by subjecting a hydride of a niobium ingot, pellet, or powder to pulverizing and dehydrogenation, or by pulverizing a sodium reduced form of potassium fluoroniobate, is mixed with tungsten carbide, tungsten oxide, or tungsten powder. Or, a mixture of niobium oxide and tungsten oxide may be subjected to carbon reduction.

For example, when the tungsten-containing niobium powder is prepared from a hydride of a niobium - tungsten alloy ingot through pulverizing and dehydrogenation, a tungsten-containing niobium powder with a desired mean particle size can be obtained by adjusting the content of hydride in the niobium - tungsten alloy, and the pulverizing time and a pulverizer.

Further, a niobium powder with a mean particle size of from 0.2 μm or more to 5 μm or less may be added to the tungsten-containing niobium powder thus obtained. The niobium powder to be added can be prepared, for example, by pulverizing a sodium reduced form of potassium fluoroniobate, or subjecting a hydride of a niobium ingot to pulverizing and dehydrogenation, or by subjecting niobium oxide to carbon reduction.

In order to further improve the leakage current value in a sintered body of the obtained tungsten-containing

niobium powder, the tungsten-containing niobium powder may be partially bonded to at least one of nitrogen, carbon, boron, or sulfur. Any of the tungsten-containing niobium nitride, tungsten-containing niobium carbide, tungsten-containing niobium boride, and tungsten-containing niobium sulfide, resulting from the bonding to nitrogen, carbon, boron, and sulfur, respectively may be added alone, or the two to four kinds may be selectively contained.

The amount of element for bonding, that is, the total content of carbon, nitrogen, boron, and sulfur, which depends upon the shape of the tungsten-containing niobium powder, may be more than 0 ppm and not more than 200,000 ppm, preferably in the range of 50 ppm to 100,000 ppm, and more preferably 200 ppm to 20,000 ppm when the tungsten-containing niobium powder has a mean particle size from 0.05 μm to 5 μm. When the total content exceeds 200,000 ppm, the capacitance characteristics deteriorate to such an extent that the niobium powder becomes unsuitable for a capacitor.

Nitridation of the tungsten-containing niobium powder can be performed by any of liquid nitridation, ion nitridation, or gas nitridation, or by a combination of those methods. Gas nitridation under a nitrogen gas atmosphere is preferred because the system can be made simple and the operation can be made easy.

For example, according to gas nitridation under a nitrogen atmosphere, the tungsten-containing niobium powder may be allowed to stand under a nitrogen gas atmosphere. The tungsten-containing niobium powder partially nitrided to a desired extent can be obtained at a nitriding atmosphere temperature of 2000°C or less within one hundred hours. An increase in processing temperature can curtail the processing time.

The tungsten-containing niobium powder can be carbonized by any method of gas carbonization, solid-phase carbonization, or liquid carbonization. For example, the tungsten-containing niobium powder may be allowed to stand together with a carbon source of a carbon-containing organic material such as a carbon material or methane at 2000°C or less under reduced pressure for one minute to one hundred hours.

The tungsten-containing niobium powder can be borided by gas boronization or solid-phase boronization. For example, the tungsten-containing niobium powder may be allowed to stand together with a boron source such as boron pellets or boron halide, i.e., trifluoroboron under reduced pressure at temperatures of 2000°C or less for one minute to one hundred hours.

The tungsten-containing niobium powder can be sulfided by any of gas sulfidation, ion sulfidation, or solid-phase sulfidation. For example, according to gas sulfidation under a sulfur gas atmosphere, the tungsten-containing niobium powder may be allowed to stand under a sulfur atmosphere. The tungsten-containing niobium powder sulfided to a desired extent can be obtained at temperatures of 2000°C or less and a standing time of one hundred hours or less. The higher the processing temperature, the shorter the processing time.

The tungsten-containing niobium powder can be used for a capacitor after granulation to have a desired configuration. Alternatively, the granulated powder may be mixed with a proper amount of ungranulated niobium powder after granulation.

With respect to the granulation method, the tungsten-containing niobium powder not subjected to granulation is allowed to stand under high vacuum, heated to an appropriate temperature, and then subjected to cracking. Alternatively, the tungsten-containing niobium powder not subjected to granulation is mixed with an appropriate binder such as camphor, polyacrylic acid, poly (methyl acrylate), or poly(vinyl alcohol), and a solvent such as acetone, alcohol, acetate, or water, and thereafter the resulting mixture is subjected to cracking.

The tungsten-containing niobium powder thus granulated can improve pressure-moldability in the preparation of a sintered body. In this case, it is preferable that the granulated powder have a mean particle size of 10 μm to 500 μm. When the mean particle size of the granulated powder is 10 μm or less, partial blocking takes place, which degrades the flowability toward a mold. When the granulated powder has a mean particle size of 500 μm or more, an angular portion of a molded article is easily chipped off after pressure molding. Granulated powders have preferably a mean particle size of 30 μm to 250 μm, and particularly preferably of 60 μm to 250 μm because the sintered body is easily impregnated with a negative electrode material after pressure molding of the niobium powder in the production of a capacitor.

The above-mentioned nitridation, carbonization, boronization, and sulfidation can be carried out, not only for the niobium powder, but also for the granulated niobium powder and for the niobium sintered body.

The tungsten-containing niobium sintered body for a capacitor is produced by sintering the aforementioned tungsten-containing niobium powder or the granulated tungsten-containing niobium powder. An example of a method for producing the sintered body will be described later. For instance, a tungsten-containing niobium powder is subjected to pressure molding to have a predetermined shape, and the molded material is heated at 500°C to 2000°C, preferably 900°C to 1500°C, and more preferably 900°C to 1300°C under the application of a pressure of $10^{-5}$ to $10^{2}$ Pa (pascal) for one minute to ten hours.

(2) Niobium Powder and Sintered Body according to the present invention

In the present invention, a niobium powder comprising at least one element as recited in claim 1 can used as

a starting material of the niobium powder.

The cerium, neodymium, rhenium, ruthenium, rhodium, palladium, and silver are elements capable of forming an alloy with niobium. In particular, a niobium powder comprising at least one element selected from the group consisting of rhenium and neodymium is preferred.

In the present invention, the total content of these elements in the niobium powder is 0.01 to 10 mol%, preferably from 0.1 to 7 mol%.

If the total content of the element is less than 0.01 mol%, oxygen in the dielectric film formed by the electrolytic oxidation which is described later cannot be inhibited from diffusing toward the niobium metal side, as a result, the stability of the electrolytic oxide film (the dielectric film) cannot be maintained and the effect of reducing LC can be hardly obtained. On the other hand, if the total content of the element exceeds 10 mol%, the content of the niobium itself in the niobium powder is reduced, as a result, the capacitance as a capacitor decreases.

In order to more reduce the leakage current, the content of the element in the niobium powder is 0.1 to 7 mol%.

In order to increase the specific surface area of powder, the niobium powder of the present invention has a mean particle size of 0.05 to 5 μm. The reasons therefor are described above with regard to the niobium powder of the first group.

In the present invention, the starting material niobium powder used for manufacturing a sintered body is a niobium powder comprising at least one element selected from the group consisting of cerium, neodymium, rhenium, ruthenium, rhodium, palladium, and silver whereby a capacitor satisfying both of the above-described properties or a niobium sintered body capable of ensuring those capacitor properties can be provided.

The mean particle size ($D_{50}$, μm) and the specific surface area (S, $m^2/g$) of a rhenium-containing niobium powder manufactured as one example by the present inventors (produced by a pulverization method) are shown in Table 3 below.

TABLE 3

| Mean Particle Size ($D_{50}$) (μm) | Specific Surface Area (S) ($m^2/g$) |
|---|---|
| 4.9 | 0.63 |
| 2.0 | 1.3 |
| 0.9 | 2.6 |
| 0.5 | 4.9 |
| 0.2 | 11.0 |
| 0.1 | 20.7 |
| 0.05 | 38.4 |

The mean particle size ($D_{50}$; μm) shown in Table 3 is a value measured using a particle size distribution measuring apparatus ("Microtrac", trade name, manufactured by Microtrac Company) (the $D_{50}$ value indicates a particle size when the cumulative % by mass corresponds to 50% by mass). The specific surface area is a value measured by the BET method.

If the mean particle size of the niobium powder of the present invention exceeds 5 μm, a capacitor having a large capacitance cannot be obtained, whereas if the mean particle size is less than 0.05 μm, the pore size becomes small and closed pores increase when a sintered body is produced from the powder, therefore, a cathode material which is described later cannot be easily impregnated, as a result, the niobium powder cannot provide a capacitor having a large capacitance and the sintered body thereof is not suitable for use in a capacitor.

From these reasons, the niobium powder for use in the present invention has a mean particle size of 0.05 to 5 μm, whereby a large-capacitance capacitor can be obtained.

The niobium powder of the present invention is preferably a powder having a BET specific surface area of at least 0.5 $m^2/g$, more preferably at least 1 $m^2/g$, and still more preferably at least 2 $m^2/g$. Also, the niobium powder of the present invention preferably has a BET specific surface area of 0.5 to 40 $m^2/g$, more preferably from 1 to 20 $m^2/g$ and particularly preferably from 1 to 10 $m^2/g$.

With respect to the dielectric constant (ε), niobium is known to have a dielectric constant as large as about two times the dielectric constant of tantalum, however, whether cerium, neodymium, titanium, rhenium, ruthenium, rhodium, palladium, silver, zinc, silicon, germanium, tin, arsenic and bismuth are a valve metal having capacitor properties is not known. Accordingly, even when said at least one element is incorporated into niobium, it is not known whether ε of the niobium powder containing the element increases.

According to the investigations by the present inventors, even when the niobium powder is reduced in the mean particle size and a sintered body having a high capacitance is manufactured therefrom, the LC value is not peculiarly increased insofar as said at least one element bismuth is contained.

The reasons for this result are presumed as follows.

Niobium has a high bonding strength to an oxygen element as compared with tantalum and therefore, oxygen in the electrolytic oxide film (dielectric material film) is liable to diffuse toward the internal niobium metal side, however, in the sintered body of the present invention, a part of niobium is bonded to said at least one element and therefore, oxygen in the electrolytic oxide film is not easily bonded to the internal niobium metal and inhibited from diffusing toward the metal side, as a result, the stability of the electrolytic oxide film can be maintained and an effect of reducing the LC value and the dispersion thereof even in the case of a capacitor having a fine particle size and a high capacitance can be attained.

The present invention is described below mainly using rhenium as an example, however, the present invention is not limited thereto and the following contents are applied also to the cases using at least one element selected from the group consisting of cerium, neodymium, rhenium, ruthenium, rhodium, palladium, and silver.

The rhenium-containing niobium power for use in the manufacture of a sintered body preferably has a mean particle size of 0.05 to 4 μm.

The rhenium-containing niobium powder having such a mean particle size can be obtained, for example, by a method of pulverizing and dehydrogenating a hydride of niobium-rhenium alloy ingot, pellet or powder. The rhenium-containing niobium powder can also be obtained by a method of mixing rhenium powder or an oxide, sulfide, sulfate, halide salt, nitrate, organic acid salt or complex salt of rhenium with a niobium powder formed by pulverizing and dehydrogenating a hydride of niobium ingot, pellet or powder, by pulverizing a sodium reduction product of potassium fluoroniobate or by pulverizing a reduction product of niobium oxide reduced using at least one member of hydrogen, carbon, magnesium, aluminum and the like; or by a method of magnesium-reducing a mixture of niobium oxide and rhenium oxide.

The niobium powder containing rhenium, zinc and germanium can be obtained, for example, by a method of pulverizing and dehydrogenating a hydride of niobium-rhenium-zinc-germanium alloy ingot, pellet or powder. This niobium powder can also be obtained by a method of mixing rhenium powder, zinc powder and germanium powder, or oxides, sulfides, sulfates, halide salts, nitrates or organic acid salts of rhenium, zinc, germanium with a niobium powder formed by pulverizing and dehydrogenating a hydride of niobium ingot, pellet or powder; by pulverizing a sodium reduction product of potassium fluoroniobate or by pulverizing a reduction product of niobium oxide reduced using at least one member of hydrogen, carbon, magnesium, aluminum and the like; or by a method of magnesium-reducing a mixture of niobium oxide, rhenium oxide, zinc oxide and germanium oxide.

For example, in the case of obtaining the rhenium-containing niobium powder by pulverizing and dehydrogenating a hydride of a niobium-rhenium alloy ingot, a rhenium-containing niobium powder having a desired mean particle size can be obtained by controlling the amount of the niobium-rhenium alloy hydrogenated, the pulverization time, the grinding machine or the like.

The thus-obtained rhenium-containing niobium powder may be mixed with a niobium powder having a mean particle size of 5 μm or less to adjust the rhenium content. The niobium powder added here may be obtained, for example, by a method of pulverizing a sodium reduction product of potassium fluoroniobate, a method of pulverizing and dehydrogenating a hydride of niobium ingot, a method of reducing a niobium oxide using at least one member of hydrogen, carbon, magnesium and aluminum, or a method of hydrogen-reducing a niobium halide. In order to further improve the leakage current value of the thus-obtained rhenium-containing niobium powder, a part of the rhenium-containing niobium powder may be surface-treated by nitridation, boronization, carbonization or sulfidation. Any of the rhenium-containing niobium nitride, rhenium-containing niobium boride, rhenium-containing niobium carbide and rhenium-containing niobium sulfide, obtained by the surface-treatment using nitridation, boronization, carbonization or sulfidation, may be contained or two, three or four thereof may also be contained in combination.

The amount bonded thereof, that is, the total content of nitrogen, boron, carbon and sulfur varies depending on the shape of the rhenium-containing niobium powder, however, in the case of powder having a mean particle size of approximately from 0.05 to 5μm, the total content is more than 0 ppm and not more than 200, 000 ppm, preferably from 50 to 100,000 ppm, particularly preferably from 200 to 20,000 ppm. If the total content exceeds 200,000 ppm, the capacitance properties are deteriorated and the fabricated product is not suitable as a capacitor.

The nitridation of the rhenium-containing niobium powder can be performed by any one of liquid nitridation, ion nitridation and gas nitridation or by a combination thereof. Among these, gas nitridation in a nitrogen gas atmosphere is preferred because the apparatus therefor is simple and the operation is easy. For example, the gas nitridation in a nitrogen gas atmosphere can be attained by allowing the above-described rhenium-containing niobium powder to stand in a nitrogen gas atmosphere. With an atmosphere temperature of 2,000°C or less and a standing time of one hundred hours or less, a rhenium-containing niobium powder having an objective nitrided amount can be obtained. The treatment time can be shortened by performing this treatment at a higher temperature.

The boronization of the rhenium-containing niobium powder may be either gas boronization or solid-phase boronization. For example, the rhenium-containing niobium powder may be boronized by allowing a boron-containing niobium powder to stand together with a boron source such as boron pellet or boron halide (e.g., trifluoroboron), at

2,000°C or less for one minute to one hundred hours under reduced pressure.

The carbonization of the rhenium-containing niobium powder may be any one of gas carbonization, solid-phase carbonization and liquid carbonization. For example, the rhenium-containing niobium powder may be carbonized by allowing it to stand together with a carbon source such as a carbon material or an organic material having carbon (e.g., methane), at 2,000°C or less for one minute to one hundred hours under reduced pressure.

The sulfidation of the rhenium-containing niobium powder may be any one of gas sulfidation, ion sulfidation and solid-phase sulfidation. For example, the gas sulfidation in a sulfur gas atmosphere can be attained by allowing the rhenium-containing niobium powder to stand in a sulfur atmosphere. With an atmosphere temperature of 2,000°C or less and a standing time of one hundred hours or less, a rhenium-containing niobium powder having an objective sulfudized amount can be obtained. The treatment time can be shortened by performing the treatment at a higher temperature.

The rhenium-containing niobium powder for capacitors of the present invention may be used after granulating the rhenium-containing niobium powder into an appropriate shape or may be used by mixing an appropriate amount of non-granulated niobium powder after the above-described granulation.

Examples of the granulation method include a method where non-granulated rhenium-containing niobium powder is allowed to stand in a high vacuum and heated to an appropriate temperature and then the mixture is cracked, and a method where non-granulated or granulated rhenium-containing niobium powder is mixed with an appropriate binder such as camphor, polyacrylic acid, polymethyl acrylic acid ester or polyvinyl alcohol, and a solvent such as acetone, alcohols, acetic acid esters or water, and then the mixture is cracked.

The rhenium-containing niobium powder granulated as such is improved in the press-molding property at the production of a sintered body. The mean particle size of the granulated powder is preferably from 10 to 500 μm. If the mean particle size of the granulated powder is less than 10 μm, partial blocking takes place and the fluidity into a metal mold deteriorates, whereas if it exceeds 500 μm, the molded article after the press-molding is readily broken at the corner parts. The mean particle size of the granulated powder is more preferably from 30 to 250 μm because a cathode agent can be easily impregnated at the manufacture of a capacitor after sintering the press-molded article.

The rhenium-containing niobium sintered body for capacitors of the present invention is produced by sintering the above-described rhenium-containing niobium powder or granulated rhenium-containing niobium powder. The production method for the sintered body is not particularly limited, however, the sintered body may be obtained, for example, by press-molding the rhenium-containing niobium powder into a predetermined shape and then heating it at 500 to 2,000°C, preferably from 900 to 1,500°C, more preferably from 900 to 1, 300°C, for one minute for one hundred hours under a pressure of $10^{-5}$ to $10^{2}$ Pa (pascal).

(3) Capacitor Device

The manufacture of a capacitor device is described below.

For example, a lead wire comprising a valve-acting metal such as niobium or tantalum and having appropriate shape and length is prepared and this lead wire is integrally molded at the press-molding of the niobium powder such that a part of the lead wire is inserted into the inside of the molded article, whereby the lead wire is designed to work out to a leading line of the sintered body.

Using this sintered body as one of the electrodes, a capacitor can be manufactured by interposing a dielectric material between this one of the electrodes and the other electrode (counter electrode). The dielectric material used here for the capacitor is preferably a dielectric material mainly comprising niobium oxide. The dielectric material mainly comprising niobium oxide can be obtained, for example, by chemically forming the lanthanum-containing niobium sintered body as one part electrode in an electrolytic solution. For chemically forming the lanthanum-containing niobium electrode in an electrolytic solution, an aqueous protonic acid solution is generally used, such as aqueous 0.1% phosphoric acid solution or aqueous sulfuric acid solution, or 1% acetic acid solution or aqueous adipic acid solution. In the case of chemically forming the lanthanum-containing niobium electrode in an electrolytic solution to obtain a niobium oxide dielectric material, the capacitor of the present invention is an electrolytic capacitor and the lanthanum-containing niobium electrode serves as an anode.

In the capacitor of the present invention, the other electrode (counter electrode) to the niobium sintered body is not particularly limited and, for example, at least one material (compound) selected from electrolytic solutions, organic semiconductors and inorganic semiconductors known in the art of aluminum electrolytic capacitor, may be used.

Specific examples of the electrolytic solution include a dimethylformamide-ethylene glycol mixed solution having dissolved therein 5% by mass of an isobutyl tripropylammonium borotetrafluoride electrolyte, and a propylene carbonate-ethylene glycol mixed solution having dissolved therein 7% by mass of tetraethylammonium borotetrafluoride.

Specific examples of the organic semiconductor include an organic semiconductor comprising a benzenepyrroline tetramer and chloranile, an organic semiconductor mainly comprising tetrathiotetracene, an organic semiconductor mainly comprising tetracyanoquinodimethane, and an electrically conducting polymer comprising a repeating unit represented by formula (1) or (2):

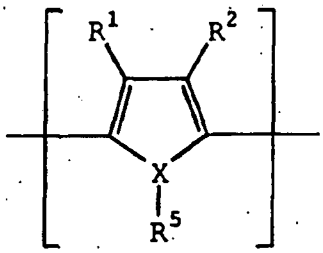

(1)

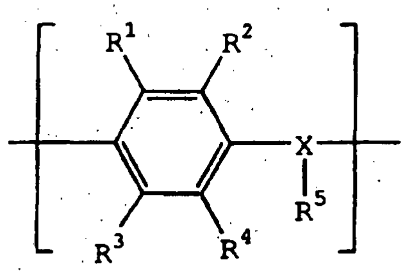

(2)

wherein $R^1$ to $R^4$ each independently represents a monovalent group selected from the group consisting of a hydrogen atom, a linear or branched, saturated or unsaturated alkyl, alkoxy or alkylester group having from 1 to 10 carbon atoms, a halogen atom, a nitro group, a cyano group, a primary, secondary or tertiary amino group, a $CF_3$ group, a phenyl group and a substituted phenyl group; each of the pairs $R^1$ and $R^2$, and $R^3$ and $R^4$ may combine at an arbitrary position to form a divalent chain for forming at least one 3-, 4-, 5-, 6- or 7-membered saturated or unsaturated hydrocarbon cyclic structure together with the carbon atoms substituted by $R^1$ and $R^2$ or by $R^3$ and $R^4$; the cyclic bond chain may contain a bond of carbonyl, ether, ester, amide, sulfide, sulfinyl, sulfonyl and imino at an arbitrary position; X represents an oxygen atom, a sulfur atom or a nitrogen atom; $R^5$ is present only when X is a nitrogen atom and independently represents hydrogen or a linear or branched, saturated or unsaturated alkyl group having from 1 to 10 carbon atoms.

In the present invention, $R^1$ to $R^4$ of formula (1) or (2) each independently preferably represents a hydrogen atom, a linear or branched, saturated or unsaturated alkyl or alkoxy group having from 1 to 6 carbon atoms, and each of the pairs $R^1$ and $R^2$, and $R^3$ and $R^4$ may combine with each other to form a ring.

In the present invention, the electrically conducting polymer comprising a repeating unit represented by formula (1) above is preferably an electrically conducting polymer comprising a structure unit represented by the following formula (3) as a repeating unit:

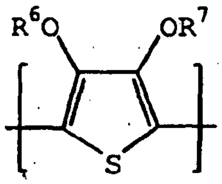

(3)

wherein $R^6$ and $R^7$ each independently represents a hydrogen atom, a linear or branched, saturated or unsaturated alkyl group having from 1 to 6 carbon atoms, or a substituent for forming at least one 5-, 6- or 7-membered saturated hydrocarbon cyclic structure containing two oxygen atoms resulting from the alkyl groups combining with each other at an arbitrary position; and the cyclic structure includes a structure having a vinylene bond which may be substituted, and a phenylene structure which may be substituted.

The electrically conducting polymer containing such a chemical structure is electrically charged and a dopant is doped thereto. For the dopant, known dopants can be used without limitation.

Specific examples of the inorganic semiconductor include an inorganic semiconductor mainly comprising lead dioxide or manganese dioxide, and an inorganic semiconductor comprising triiron tetraoxide. These semiconductors may be used individually or in combination of two or more thereof.

Examples of the polymer containing a repeating unit represented by formula (1) or (2) include polyaniline, polyoxyphenylene, polyphenylene sulfide, polythiophene, polyfuran, polypyrrole, polymethylpyrrole, and substitution derivatives and copolymers thereof. Among these, preferred, are polypyrrole, polythiophene and substitution derivatives thereof (e.g., poly(3,4-ethylenedioxythiophene)).

When the organic or inorganic semiconductor used has an electrical conductivity of $10^{-2}$ to $10^3$ $S \cdot cm^{-1}$, the fabricated capacitor can have a smaller impedance value and can be more increased in the capacitance at a high frequency.

The electrically conducting polymer layer is produced, for example, by a method of polymerizing a polymerizable compound comprising aniline, thiophene, furan, pyrrole, methylpyrrole or a substitution derivative thereof under the action of an oxidizing agent capable of undergoing a satisfactory oxidation reaction of dehydrogenating double oxidation.

Examples of the polymerization reaction from the polymerizable compound (monomer) include vapor phase polymerization and solution polymerization. The electrically conducting polymer layer is formed on the surface of the niobium sintered body having thereon a dielectric material. In the case where the electrically conducting polymer is an organic solvent-soluble polymer capable of solution coating, a method of coating the polymer on the surface of the sintered body to form an electrically conducting polymer layer is used.

One preferred example of the production method using the solution polymerization is a method of dipping the niobium sintered body having formed thereon a dielectric layer in a solution containing an oxidizing agent (Solution 1) and subsequently dipping the sintered body in a solution containing a monomer and a dopant (Solution 2) to form an electrically conducting polymer on the surface of the sintered body. Also, the sintered body may be dipped in Solution 1 after it is dipped in Solution 2. Solution 2 used in the above-described method may be a monomer solution not containing a dopant. In the case of using a dopant, a solution containing an oxidizing agent may be allowed to be present together on use of the dopant.

Such an operation in the polymerization step is repeated once or more, preferably from 3 to 20 times, per the niobium sintered body having thereon a dielectric material, whereby a dense and stratified electrically conducting polymer layer can be easily formed.

In the production method of a capacitor according to the present invention, any oxidizing agent may be used insofar as it does not adversely affect the capacitor performance and the reductant of the oxidizing agent can work out to a dopant and elevate the electrically conductivity of the electrically conducting polymer. An industrially inexpensive compound facilitated in the handling at the production is preferred.

Specific examples of the oxidizing agent include Fe(III)-base compounds such as $FeCl_3$, $FeClO_4$ and Fe (organic acid anion) salt; anhydrous aluminum chloride/cupurous chloride; alkali metal persulfates, ammonium persulfates; peroxides; manganeses such as potassium permanganate; quinones such as 2,3-dichloro-5,6-dicyano-1,4-benzoquinone (DDQ), tetrachloro-1,4-benzoquinone and tetracyano-1,4-benzoquinone; halogens such as iodine and bromine; peracid; sulfonic acid such as sulfuric acid, fuming sulfuric acid, sulfur trioxide, chlorosulfonic acid, fluorosulfonic acid and amidosulfuric acid; ozone, etc. and a mixture of a plurality of these oxidations.

Examples of the fundamental compound of the organic acid anion for forming the above-described Fe (organic acid anion) salt include organic sulfonic acid, organic carboxylic acid, organic phosphoric acid and organic boric acid, etc. Specific examples of the organic sulfonic acid include benzenesulfonic acid, p-toluenesulfonic acid, methanesulfonic acid, ethanesulfonic acid, $\alpha$-sulfonaphthalene, $\beta$-sulfonaphthalene, naphthalenedisulfonic acid, alkylnaphthalenesulfonic acid (examples of the alkyl group include butyl, triisopropyl and di-tert-butyl), etc.

Specific examples of the organic carboxylic acid include acetic acid, propionic acid, benzoic acid and oxalic acid. Furthermore, polymer electrolyte anions such as polyacrylic acid, polymethacrylic acid, polystyrenesulfonic acid, polyvinylsulfonic acid, poly-$\alpha$-methylsulfonic acid polyvinylsulfate, polyethylenesulfonic acid and polyphosphoric acid may also be used in the present invention. These organic sulfuric acids and organic carboxylic acids are mere examples and the present invention is not limited thereto. Examples of the counter cation to the above-described anion include alkali metal ions such as $H^+$, $Na^+$ and $K^+$, and ammonium ions substituted by a hydrogen atom, a tetramethyl group, a tetraethyl group, a tetrabutyl group or a tetraphenyl group, however, the present invention is not limited thereto. Among these oxidizing agents, more preferred are trivalent Fe-base compounds and oxidizing agents comprising cuprous chloride, an alkali persulfate, an ammonium persulfate, an acid or a quinone.

For the anion having a dopant ability which is allowed to be present together, if desired, in the production of a polymer composition for the electrically conducting polymer (anion other than the reductant anion of the oxidizing agent), an electrolyte anion having as a counter anion an oxidizing agent,anion (a reductant of oxidizing agent) produced from the above-described oxidizing agent, or other electrolyte anion may, be used. Specific examples thereof include protonic acid anions including halide anion of Group 5B elements, such as $PF_6^-$, $SbF_6^-$ and $AsF_6^-$; halide anion of Group 3B elements, such as $BF_4^-$; halogen anion such as $I^-(I_3^-)$, $Br^-$ and $Cl^-$; perhalogenate anion such as $ClO_4^-$; Lewis acid anion such as $AlCl_4^-$, $FeCl_4^-$ and $SnCl_5^-$; inorganic acid anion such as $NO_3^-$ and $SO_4^{2-}$; sulfonate anion such as p-toluenesulfonic acid, naphthalenesulfonic acid, and alkyl-substituted naphthalenesulfonic acid having from 1 to 5 carbon atoms (hereinafter simply referred to as "C1-5"); organic sulfonate anion such as $CF_3SO_3^-$ and $CH_3SO_3^-$; and carboxylate anion such as $CH_3COO^-$ and $C_6H_5COO^-$.

Similarly to the above, polymer electrolyte anions such as polyacrylic acid, polymethacrylic acid, polystyrenesulfonic acid, polyvinylsulfonic acid, polyvinylsulfonic acid, poly-$\alpha$-methylsulfonic acid, polyethylenesulfonic acid and polyphosphoric acid may also be used, however, the present invention is not limited thereto. The anion is preferably a polymer-type or oligomer-type organic sulfonic acid compound anion or a polyphosphoric acid compound anion. For the anion-donating compound, an aromatic sulfonic acid compound (e.g., sodium dodecylbenzenesulfonate, sodium naphthalenesulfonate) is preferably used.

Among the organic sulfonate anions, the more effective dopant are a sulfoquinone compound having one or more sulfo-anion group ($-SO_3^-$) within the molecule and a quinone structure, and an anthracene sulfonate anion.

Examples of the fundamental skeleton for the sulfoquinone anion of the above-described sulfoquinone compound include p-benzoquinone, o-benzoquinone, 1,2-naphthoquinone, 1,4-naphthoquinone, 2,6-naphthoquinone, 9,10-anthraquinone, 1,4-anthraquinone, 1,2-anthraquinone, 1,4-chrysenequinone, 5,6-chrysenequinone, 6,12-chrysenequinone, acenaphthoquinone, acenaphthenequinone, camphorquinone, 2,3-bornanedione, 9,10-phenanthrenequinone and 2,7-pyrenequinone.

In the case where the other electrode (counter electrode) is solid, an electrical conducting layer may be provided thereon so as to attain good electrical contact with an exterior leading line (for example, lead frame), if desired.

The electrical conducting layer can be formed, for example, by the solidification of an electrically conducting paste, planting, metallization or formation of a heat-resistant electrically conducting resin film. Preferred examples of the electrically conducting paste include silver paste, copper paste, aluminum paste, carbon paste and nickel paste, and these may be used individually or in combination of two or more thereof. In the case of using two or more kinds of pastes, the pastes may be mixed or may be superposed one on another as separate layers. The electrically conducting paste applied is then solidified by allowing it to stand in air or under heating. Examples of the plating include nickel plating, copper plating, silver plating and aluminum plating. Examples of the vapor-deposited metal include aluminum, nickel, copper and silver.

More specifically, for example, carbon paste and silver paste are stacked in this order ore the second electrode and these are molded with a material such as epoxy resin, thereby constructing a capacitor. This capacitor may have a niobium or tantalum lead which is sintered and molded integrally with the lanthanum-containing niobium sintered body or welded afterward.

The thus-constructed capacitor of the present invention is jacketed using, for example, resin mold, resin case, metallic jacket case, dipping of resin or laminate film, and then used as a capacitor product for various uses.

In the case where the other electrode (counter electrode) is liquid, the capacitor constructed by the above-described two electrodes and a dielectric material is housed, for example, in a can electrically connected to the another part electrode to form a capacitor. In this case, the electrode side of the lanthanum-containing niobium sintered body is guided outside through a niobium or tantalum lead described above and at the same time, insulated from the can using an insulating rubber or the like.

By manufacturing a sintered body for capacitors using the niobium powder produced according to the embodiment of the present invention described in the foregoing pages and fabricating a capacitor from the sintered body, a capacitor having a good heat resistance, a small leakage current and good reliability can be obtained.

The capacitor of the present invention has a large electrostatic capacitance for the volume as compared with conventional tantalum capacitors and more compact capacitor products can be obtained.

The capacitor having these properties of the present invention can be applied to uses as a bypass or coupling capacitor in an analog or digital circuit and as a large-capacitance smoothing capacitor used in the light source circuit and also to uses of conventional tantalum capacitor.

In general, such a capacitor is used in an electronic circuit on great occasions and therefore, when the capacitor of the present invention is used, the restriction in displacement of electronic parts or discharge of heat is relieved and a highly reliable electronic circuit can be housed in a narrower space than in conventional techniques.

Furthermore, when the capacitor of the present invention is used, a highly reliable electronic instrument more compact than conventional ones, such as computer, computer peripheral equipment such as PC card, mobile equipment such as portable telephone, home appliances, equipment mounted on a car, artificial satellite and communication equipment, can be obtained.

Best Mode for Carrying Out the Invention

The present invention will now be explained more specifically with reference to the examples.

The capacitance and the leakage current value of the sintered body of a niobium powder containing at least one element selected from the group consisting of chromium, molybdenum, tungsten boron, aluminum, gallium, indium thallium, cerium, neodymium, titanium, rhenium, ruthenium, rhodium, palladium, silver, zinc, silicon, germanium, tin, phosphorus, arsenic, bismuth, rubidium, cesium, magnesium, strontium, barium, scandium, yttrium, lanthanum, praseodymium, samarium, europium, gadolinium, terbium, dysprosium, holmium, erbium, thulium, ytterbium, lutetium, hafnium, vanadium, osmium, iridium, platinum, gold, cadmium, mercury, lead, sulfur, selenium and tellurium (hereinafter referred to as "niobium sintered body" or simply "sintered body") were measured by the following methods.

Measurement of the capacitance of the sintered body:

The niobium sintered body immersed in a 30% sulfuric acid and a tantalum electrode in the sulfuric acid were connected by a measuring apparatus made by Hewlett Packard Co., Ltd., under the trademark of "Precision LCR meter HP4284A" to measure the capacitance at room temperature. The capacitance (unit: μF·V/g) at 120 Hz was regarded as the capacitance of the sintered body.

Measurement of the leakage current of the sintered body:

A voltage that was 70% of the forming voltage (direct current) applied to form the dielectric was continuously applied for 3 minutes between the sintered body immersed in a 20% aqueous solution of phosphoric acid and an electrode in the aqueous solution of phosphoric acid at room temperature. The current value measured was regarded as the leakage current value (i.e., LC value with a unit of μA/g) of the sintered body. In the present invention, a voltage of 14 V was applied.

The capacitance and the leakage current value of the chip capacitor processed in the Examples were measured as follows.

Measurement of the capacitance of the capacitor:

The LCR measuring apparatus made by Hewlett Packard Co., Ltd. was connected between the two terminals of the produced chip capacitor to measure the capacitance at room temperature. The capacitance at 120 Hz was regarded as the capacitance of the chip capacitor.

Measurement of the leakage current of the capacitor:

A direct current voltage was selected from the rated voltages of 2.5 V, 4 V, 6.3 V, 10 V, 16 V, and 25 V so that the selected voltage might be the closest to about 1/3 to about 1/4 of the forming voltage applied to prepare a dielectric, and continuously applied between the two terminals of the chip capacitor for one minute at room temperature. The current value measured one minute later was regarded as the leakage current value of the chip capacitor. In the present invention, a voltage of 6.3 V was applied.

Example 1 (Reference only)

92 g of a niobium ingot and 1.8 g of a tungsten powder were subjected to arc fusion, whereby a tungsten-containing niobium ingot (alloy) containing 1 mol% of tungsten was prepared. 50 g of the ingot was put into a reaction vessel made of stainless steel (SUS304), and hydrogen was continuously introduced into the vessel at 400°C for 10 hours. The hydrogenated tungsten-containing niobium in the form of a cake was cooled and pulverized with balls made of stainless steel (SUS) for 10 hours in a pot made of stainless steel (SUS304).

The hydrogenated product prepared as a slurry in water in an amount of 20% by volume was placed in a wet pulverizer made of stainless steel (SUS304) (trademark "Atritor", made by Atlanta Corporation) together with zirconia balls and wet grinding was performed for 7 hours. The slurry was subjected to centrifugal sedimentation, and the pulverized particles were obtained by decantation. The pulverized particles were dried at 50°C under a vacuum of 133 Pa.

Subsequently, the hydrogenated tungsten-containing niobium powder was heated at 400°C for dehydrogenation under the application of a pressure of 1.33 x $10^{-2}$ Pa for one hour. The mean particle size of the obtained tungsten-containing niobium powder was 1.0 μm, and the content of tungsten was found to be 1 mol% when measured by atomic absorption analysis. The tungsten-containing niobium powder thus obtained was granulated at 1150°C under a vacuum of 3.99 x $10^{-3}$ Pa, and thereafter, subjected to disintegration. Thus, a granulated powder with a mean particle size of 150 μm was obtained.

The tungsten-containing niobium powder thus granulated was integrally molded with a niobium lead wire with a diameter of 0.3 mm, whereby a molded article with a size of around 0.3 cm x 0.18 cm x 0.45cm, weighing about 0.1 g, was produced.

The molded article was allowed to stand at 1200°C under a vacuum of 3.99 x $10^{-3}$ Pa for 30 minutes, thereby obtaining a sintered body. The obtained sintered body was subjected to forming in a 0.1% aqueous solution of phosphoric acid at 80°C under the application of a voltage of 20 V for 200 minutes, so that a dielectric layer was deposited on the surface of the sintered body. Then, the capacitance of the sintered body in 30% sulfuric acid, and the leakage current of the sintered body (hereinafter referred to as "LC") in a 20% aqueous solution of phosphoric acid were separately measured. The results are shown in TABLE 5.

Examples 2 to 9 (Reference only)

In order to produce a niobium sintered body containing at least one of the above-mentioned transition elements of group 6 in the periodic table, that is, at least one element selected from the group consisting of chromium, molybdenum, and tungsten, the transition element(s) of group 6 of the periodic table in the form of a powder and a niobium ingot were mixed in an arbitrary ratio. Thus, a niobium ingot containing the transition element of the group 6 of the periodic table was prepared by arc fusion. The niobium ingot, which weighed 50 g, was pulverized using the same apparatus as

employed in Example 2 with the pulverizing time being changed. Using the prepared niobium powder containing the transition element of group 6 of the periodic table, a sintered body was produced. The capacitance and the LC of the sintered body were separately measured. TABLE 5 shows the results.

Comparative Examples 1 to 4 (Reference only)

A niobium powder containing no transition element of group 6 of the periodic table was prepared in the same manner as in Example 1 in order to compare the results of Examples 1 to 9. Using the niobium powder, a sintered body was produced by following the same procedures as in Example 1, and the capacitance and the LC of the sintered body were measured. TABLE 5 shows the results.

TABLE 5

| | Composition (molar ratio) | | | | Mean Particle Size (μm) | Capacitance (μF·V/g) | LC (μA/g) |
|---|---|---|---|---|---|---|---|
| | Nb | Cr | Mo | W | | | |
| Ex. 1 | 99 | - | - | 1 | 1.0 | 120000 | 36 |
| Ex. 2 | 99 | - | 1 | - | 1.0 | 118000 | 42 |
| Ex. 3 | 99 | 1 | - | - | 1.0 | 115000 | 52 |
| Ex. 4 | 99 | - | 0.5 | 0.5 | 1.0 | 121000 | 42 |
| Ex. 5 | 99 | 0.2 | - | 0.8 | 1.0 | 119000 | 40 |
| Ex. 6 | 99 | - | - | 1 | 0.5 | 240000 | 132 |
| Ex. 7 | 99 | - | - | 1 | 0.7 | 169000 | 97 |
| Ex. 8 | 99 | - | - | 1 | 1.3 | 99000 | 27 |
| Ex. 9 | 99 | - | - | 1 | 3.2 | 31000 | 3 |
| Comp. Ex. 1 | 100 | - | - | - | 0.5 | 210000 | 2210 |
| Comp. Ex. 2 | 100 | - | - | - | 0.7 | 139000 | 1570 |
| Comp. Ex. 3 | 100 | - | - | - | 1.0 | 101000 | 592 |
| Comp. Ex. 4 | 100 | - | - | - | 1.3 | 85000 | 389 |

Examples 10 to 15 (Reference only)

The amounts of niobium and tungsten were varied before arc fusion in order to change the content of tungsten in the obtained tungsten-containing niobium. Thus, a niobium ingot containing tungsten in an amount of 0.01 to 10 mol% was prepared. A sintered body was prepared from 50 g of the tungsten-containing niobium ingot having each concentration of tungsten in the same manner as in Example 1. The capacitance and the LC were separately measured. TABLE 8 shows the results.

Comparative Example 5 and Example 16 (Reference only)

A niobium ingot containing 0 mol% of tungsten, and a niobium ingot containing 15.5 mol% of tungsten were prepared to compare the results of Examples 10 to 15. A sintered body was prepared from 50 g of the tungsten-containing niobium ingot having each concentration of tungsten in the same manner as in Example 1. The capacitance and the LC were separately measured. TABLE 6 shows the results.

TABLE 6

| | Content of Tungsten (mol%) | Mean Particle Size (μm) | Capacitance (μF·V/g) | LC (μA/g) |
|---|---|---|---|---|
| Example 10 | 0.02 | 1.0 | 111000 | 79 |
| Example 11 | 0.05 | 1.0 | 113000 | 71 |
| Example 12 | 0.5 | 1.0 | 121000 | 39 |

(continued)

| | Content of Tungsten (mol%) | Mean Particle Size (μm) | Capacitance (μF·V/g) | LC (μA/g) |
|---|---|---|---|---|
| Example 13 | 3.1 | 1.0 | 119000 | 39 |
| Example 14 | 6.2 | 1.0 | 117000 | 63 |
| Example 15 | 10.0 | 1.0 | 109000 | 76 |
| Comparative Example 5 | 0.0 | 1.0 | 101000 | 592 |
| Example 16 | 15.5 | 1.0 | 67000 | 89 |

Examples 17 to 22 (Reference only)

100 g of a niobium ingot was put into a reaction vessel made of stainless steel (SUS304), and hydrogen was continuously introduced into the vessel at 400°C for 10 hours. The hydrogenated niobium in the form of a cake was cooled and pulverized with balls made of stainless steel (SUS) for 10 hours in a pot made of stainless steel (SUS304). The hydrogenated product was prepared as a slurry in water in an amount of 20% by volume and placed in a wet pulverizer made of stainless steel (SUS304) (trademark "Atritor") together with zirconia balls, and wet grinding was performed for 7 hours. The slurry was subjected to centrifugal sedimentation, and the pulverized particles were obtained by decantation. The pulverized particles were dried at 50°C under a vacuum of 133 Pa. Subsequently, the hydrogenated niobium powder was heated at 400°C for dehydrogenation under the application of a pressure of 1.33 x $10^{-2}$ Pa for one hour. The mean particle size of the obtained niobium powder was 1. 3 μm.

Any one of tungsten carbide, tungsten oxide, or tungsten metal, each having a mean particle size of about 1 μm, was added to the niobium powder in an arbitrary mixing ratio. The tungsten-containing niobium powder thus obtained was granulated at 1150°C under a vacuum of 3.99 x $10^{-3}$ Pa, and thereafter, subjected to disintegration. Thus, a granulated powder with a mean particle size of 190 μm was obtained. The tungsten-containing niobium granulated powder was integrally molded with a niobium lead wire with a diameter of 0.3 mm, whereby a molded article with a size of around 0.3 cm x 0.18 cm x 0.45 cm, weighing about 0.1 g, was produced.

The molded article was allowed to stand at 1230°C under a vacuum of 3.99 x $10^{-3}$ Pa for 30 minutes, thereby obtaining a sintered body. The obtained sintered body was subjected to forming in a 0.1% aqueous solution of phosphoric acid at 80°C under,the application of a voltage of 20 V for 200 minutes, so that a dielectric layer was deposited on the surface of the sintered body. Then, the capacitance of the sintered body in 30% sulfuric acid, and the LC of the sintered body in a 20% aqueous solution of phosphoric acid were separately measured. The results are shown in TABLE 7.

TABLE 7

| | Spieces of Tungsten | Content of Tungsten (mol%) | Capacitance (μF·V/g) | LC (μA/g) |
|---|---|---|---|---|
| Example 17 | WC | 0.2 | 100000 | 35 |
| Example 18 | WC | 1.0 | 98000 | 26 |
| Example 19 | $WO_2$ | 0.5 | 99000 | 27 |
| Example 20 | $WO_2$ | 2.2 | 97000 | 28 |
| Example 21 | W | 0.05 | 101000 | 40 |
| Example 22 | W | 0.7 | 99000 | 29 |

Examples 23 to 27 (Reference only)

To obtain a tungsten-containing niobium nitride, 10 g of the tungsten-containing niobium powder with a mean particle size of 0.9 μm, containing tungsten in an amount of 1.2 mol%, prepared by the same method as in Example 15, was put into a reaction vessel made of stainless steel (SUS304). With nitrogen introduced into the vessel at 300°C for 0.5 to 20 hours, a tungsten-containing niobium nitride was obtained. The amount of nitrogen in the niobium nitride was determined using an apparatus made by LECO Corporation for determining nitrogen content based on thermal conductivity. The ratio of the amount of nitrogen to the mass of the powder separately measured was defined as the nitride content. As a result, the nitride content was 0.02 to 0.89% by mass.

The tungsten-containing niobium nitride thus obtained was subjected to the same steps of granulation, molding, and sintering as in Example 1, so that a sintered body was prepared. The obtained sintered body was subjected to

forming in a 0.1% aqueous solution of phosphoric acid at 80°C under the application of a voltage of 20 V for 200 minutes, so that a dielectric layer was deposited on the surface of the sintered body. Then, the capacitance of the sintered body in 30% sulfuric acid, and the LC of the sintered body in a 20% aqueous solution of phosphoric acid were separately measured. The results are shown in TABLE 8.

TABLE 8

| | Content of Tungsten (mol%) | Amount of Nitrogen (% by mass) | Capacitance (μF·V/g) | LC (μA/g) |
|---|---|---|---|---|
| Example 23 | 1.2 | 0.02 | 140000 | 65 |
| Example 24 | 1.2 | 0.10 | 136000 | 58 |
| Example 25 | 1.2 | 0.28 | 138000 | 55 |
| Example 26 | 1.2 | 0.43 | 141000 | 63 |
| Example 27 | 1.2 | 0.89 | 139000 | 71 |

Examples 28 to 30 (Reference only)

In order to obtain a sintered body comprising a mixture of a tungsten-containing niobium powder and a niobium powder, a tungsten-containing niobium powder with a mean particle size of 1.0 μm containing tungsten in an amount of 10 mol% was prepared by the same method as in Example 1. Apart from this, sodium was added to 20 g of potassium fluoroniobate fully dried at 80°C under vacuum in a nickel crucible so that the amount of sodium was 10 times the molar amount of potassium fluoroniobate. Then, reduction was carried out at 1000°C in an atmosphere of argon for 20 hours. After completion of the reduction reaction, the reduced product was cooled, and successively washed with water, 95% sulfuric acid, and water, and thereafter dried under vacuum.

The resulting product was pulverized for 40 hours using a ball mill, that is, an alumina pot provided with silica-alumina balls. Then, the pulverized product was immersed in a liquid mixture of 50% nitric acid and a 10% aqueous solution of hydrogen peroxide in a ratio by mass of 3:2, with stirring. The pulverized product was thoroughly washed with water to remove impurities until the pH of the product reached 7, and dried under vacuum. The mean particle size of the obtained niobium powder was 1.2 μm.

The tungsten-containing niobium powder and the niobium powder separately prepared by the above-mentioned methods were sufficiently mixed in an arbitrary ratio, and the mixture was subjected to the same steps of granulation, molding, and sintering as in Example 15, thereby obtaining a sintered body. The capacitance and the LC of the sintered body were separately measured. TABLE 9 shows the results.

Examples 31 to 33 (Reference only)

In order to obtain a sintered body of a tungsten-containing niobium nitride comprising a mixture of a tungsten-containing niobium powder and a niobium powder, a tungsten-containing niobium powder with a mean particle size of 1.0 μm containing tungsten in an amount of 10 mol% was prepared by the same method as in Example 15. Apart from this, 50 g of a niobium ingot was put into a reaction vessel made of stainless steel (SUS304), and hydrogen was continuously introduced into the vessel at 400°C for 12 hours. The hydrogenated niobium in the form of a cake was cooled and pulverized with iron balls for 10 hours in a pot made of stainless steel (SUS304).

The pulverized product was put into the same reaction vessel made of stainless steel (SUS304) as mentioned above, and again hydrogenated under the same conditions as mentioned above. The hydrogenated product was prepared as a slurry in water in an amount of 20% by volume and placed in a wet pulverizer made of stainless steel (SUS304) (trademark "Atritor") together with zirconia balls and wet grinding was performed for 6 hours.

The slurry was subjected to centrifugal sedimentation, and the pulverized particles were obtained by decantation. The pulverized particles were dried at 50°C under a vacuum of 133 Pa. Subsequently, the hydrogenated niobium powder was heated at 400°C for dehydrogenation under a pressure of $1.33 \times 10^{-2}$ Pa for one hour. The mean particle size of the obtained niobium powder was 1.3 μm.

The tungsten-containing niobium powder and niobium powder thus obtained were sufficiently mixed in an arbitrary ratio, and a nitride was obtained in the same manner as in Example 25. The tungsten-containing niobium nitride was subj ected to the steps of granulation, molding, and sintering, so that a sintered body was prepared. Then, the capacitance and the LC of the sintered body were separately measured. The results are shown in TABLE 9.

TABLE 9

| | Type of Niobium Powder | Mixing Ratio (tungsten-containing niobium powder : niobium powder) | Capacitance (μF·V/g) | LC (μA/g) |
|---|---|---|---|---|
| Example 28 | Reduced powder | 90:10 | 110000 | 73 |
| Example 29 | Reduced powder | 50:50 | 117000 | 55 |
| Example 30 | Reduced powder | 10:90 | 119000 | 38 |
| Example 31 | Pulverized powder | 80:20 | 111000 | 68 |
| Example 32 | Pulverized powder | 40:60 | 118000 | 52 |
| Example 33 | Pulverized powder | 20:80 | 121000 | 41 |

Examples 34 and 35 (Reference only)

In Example 34 and Example 35, 50 units of sintered bodies were prepared in the same manner as in Example 1 and Example 11 respectively. A voltage of 20 V was applied to each sintered body for 200 minutes in a 0.1% aqueous solution of phosphoric acid, whereby a dielectric oxide film was deposited on the surface of the sintered body by electrolytic forming. Then, the steps of immersing the dielectric-film-bearing sintered body in a 60% aqueous solution of manganese nitrate and heating at 220°C for 30 minutes were repeated, so that a manganese dioxide layer serving as the counter electrode layer was formed on the dielectric oxide film. Subsequently, a carbon layer and a silver paste layer were successively overlaid on the counter electrode layer. After mounting of a lead frame, the whole body was sealed with an epoxy resin to produce a chip capacitor. TABLE 10 shows the average capacitance and the average LC value of the chip capacitors (n = 50 units for each). The LC value was a value obtained at room temperature under a voltage of 6.3 V for one minute.

Examples 36 and 37 (Reference only)

In Example 36 and Example 37, 50 units of sintered bodies were prepared in the same manner as in Example 8 and Example 15 respectively. A voltage of 20 V was applied to each sintered body for 200 minutes in a 0.1% aqueous solution of phosphoric acid, whereby a dielectric oxide film was deposited on the surface of the sintered body by electrolytic forming. Then, the steps of immersing the dielectric-film-bearing sintered body in a liquid mixture of a 35% aqueous solution of lead acetate and a 35% aqueous solution of ammonium persulfate in a mixing ratio by volume of 1:1 and inducing a reaction at 40°C for one hour were repeated, so that a mixture layer of lead dioxide and lead sulfate serving as the counter electrode layer was formed on the dielectric oxide film. Subsequently, a carbon layer and a silver paste layer were successively overlaid on the counter electrode layer.

After mounting of a lead frame, the whole body was sealed with an epoxy resin to produce a chip capacitor. TABLE 10 shows the average capacitance and the average LC value of the chip capacitors (n = 50 units for each). The LC value was a value obtained at room temperature under a voltage of 6.3 V for one minute.

Examples 38 to 40 (Reference only)

In Example 38, Example 39, and Example 40, 50 units of sintered bodies were prepared in the same manner as in Example 7, Example 12, and Example 25, respectively. A voltage of 20 V was applied to each sintered body for 200 minutes in a 0.1% aqueous solution of phosphoric acid, whereby a dielectric oxide film was deposited on the surface of the sintered body by electrolytic forming. Then, the steps of bringing the dielectric-film-bearing sintered body into contact with a liquid mixture of a 10% aqueous solution of ammonium persulfate and a 0.5% aqueous solution of anthraquinonesulfonic acid in a mixing ratio by volume of 1 : 1 and exposing the dielectric oxide film to a pyrrole gas were repeated at least 5 times, so that the other electrode (counter electrode) of polypyrrole was formed on the dielectric oxide film.

Subsequently, a carbon layer and a silver paste layer were successively overlaid on the counter electrode. After mounting of a lead frame, the whole body was sealed with an epoxy resin to produce a chip capacitor. TABLE 10 shows the average capacitance and the average LC value of the chip capacitors (n = 50 units for each). The LC value was a value obtained at room temperature under a voltage of 6.3 V for one minute.

Comparative Examples 6 to 8 (Reference only)

In a nickel crucible, sodium was added to 20 g of potassium fluoroniobate fully dried at 80°C under vacuum so that the amount of sodium was 10 times the molar amount of potassium fluoroniobate. Then, reduction was carried out at 1000°C in an atmosphere of argon for 20 hours. After completion of the reduction reaction, the reduced product was cooled, and successively washed with water, 95% sulfuric acid, and water, and thereafter dried under vacuum. The resulting product was pulverized for 40 hours using a ball mill, that is, an alumina pot provided with silica-alumina balls. Then, the pulverized product was immersed in a liquid mixture of 50% nitric acid and a 10% aqueous solution of hydrogen peroxide in a ratio by mass of 3:2, with stirring. The pulverized product was thoroughly washed with water to remove impurities until the pH of the product reached 7, and dried under vacuum. The mean particle size of the obtained niobium powder was 1.3 $\mu$m. 30 g of the niobium powder thus prepared was put into a reaction vessel made of stainless steel (SUS304), with nitrogen introduced therein at 300°C for 0.5 to 4 hours. Thus, a niobium nitride was obtained.

The amount of nitrogen in the niobium nitride was determined using an apparatus made by LECO Corporation for determining nitrogen content based on thermal conductivity. The ratio of the amount of nitrogen to the mass of the powder separately measured was defined as the nitride content. As a result, the nitride content was 0.02 to 0.30% by mass. The niobium nitride thus obtained was subjected to the same steps of granulation, molding, and sintering as in Example 1, so that a sintered body was prepared. With respect to 50 units of the sintered bodies thus obtained, a voltage of 20 V was applied to each sintered body for 200 minutes in a 0.1% aqueous solution of phosphoric acid, whereby a dielectric oxide film was deposited on the surface of the sintered body by electrolytic forming. Then, the steps of immersing the dielectric-film-bearing sintered body in a 60% aqueous solution of manganese nitrate and heating the sintered body at 220°C for 30 minutes were repeated, so that a manganese dioxide layer serving as the counter electrode layer was formed on the dielectric oxide film. Subsequently, a carbon layer and a silver paste layer were successively overlaid on the counter electrode. After mounting of a lead frame, the whole body was sealed with an epoxy resin to produce a chip capacitor. TABLE 10 shows the average capacitance and the average LC value of the chip capacitors (n = 50 units for each). The LC value was a value obtained at room temperature under a voltage of 6.3 V for one minute.

Comparative Examples 9 to 11 (Reference only)

50 g of a niobium ingot was put into a reaction vessel made of stainless steel (SUS304), and hydrogen was continuously introduced into the vessel at 400°C for 12 hours. The hydrogenated niobium in the form of a cake was cooled and pulverized with iron bails for 10 hours in a pot made of stainless steel (SUS304). The pulverized product was put into the same reaction vessel made of stainless steel (SUS304) as mentioned above, and again hydrogenated under the same conditions as mentioned abode. The hydrogenated product was prepared as a slurry in water in an amount of 20% by volume and placed in a wet pulverizer made of stainless steel (SUS304) (trademark "Atritor") together with zirconia balls and wet grinding was performed for 6 hours. The slurry was subjected to centrifugal sedimentation, and the pulverized particles were obtained by decantation. The pulverized particles were dried at 50°C under a vacuum of 133 Pa.

Subsequently, the hydrogenated niobium powder was heated at 400°C for dehydrogenation under a pressure $1.33 \times 10^{-2}$ Pa for one hour. The mean particle size of the obtained niobium powder was 1.0 $\mu$m. 30 g of the niobium powder was put into a reaction vessel made of stainless steel (SUS304), with nitrogen being introduced therein at 300°C for 0.5 to 3 hours, thereby obtaining a niobium nitride. The amount of nitrogen in the niobium nitride was determined using an apparatus made by LECO Corporation for determining nitrogen content based on thermal conductivity. The ratio of the amount of nitrogen to the mass of the powder separately measured was defined as the nitride content. As a result, the nitride content was 0.03 to 0.28% by mass. The niobium nitride thus obtained was subjected to the same steps of granulation, molding, and sintering as in Example 1, so that a sintered body was prepared. With respect to 50 units of sintered bodies, a voltage of 20 V was applied to each sintered body for 200 minutes in a 0.1% aqueous solution of phosphoric acid, whereby a dielectric oxide film was deposited on the surface of the sintered body by electrolytic forming. Then, the steps of bringing the dielectric-film-bearing sintered body into contact with a liquid mixture of a 10% aqueous solution of ammonium persulfate and a 0.5% aqueous solution of anthraquinonesulfonic acid in a mixing ratio by volume of 1:1 and exposing the dielectric oxide film to a pyrrole gas were repeated at least 5 times, so that the counter electrode of polypyrrole was formed on the dielectric oxide film. Subsequently, a carbon layer and a silver paste layer were successively overlaid on the counter electrode.

After mounting of a lead frame, the whole body was sealed with an epoxy resin to produce a chip capacitor.

TABLE 10 shows the average capacitance and the average LC value of the chip capacitors (n = 50 units for each). The LC value was a value obtained at room temperature under a voltage of 6.3 V for one minute.

Example 41 (Reference only)

In Example 41, 50 units of sintered bodies were prepared in the same manner as in Example 25. A voltage of 20 V was applied to each sintered body for 200 minutes in a 0.1% aqueous solution of phosphoric acid, whereby a dielectric oxide film was deposited on the surface of the sintered body by electrolytic forming. Then, the niobium sintered body was immersed in an aqueous solution containing ammonium persulfate in an amount of 25% by mass (solution 1A), removed from the solution 1A, and dried at 80°C for 30 minutes, thereby forming a dielectric. Thereafter, the dielectric-deposited sintered body was immersed in an isopropanol solution containing 3,4-ethylenedioxythiophene in an amount of 18% by mass (solution 2), removed from the solution 2, and allowed to stand at 60°C for 10 minutes, thereby carrying out oxidative polymerization.

The resultant product was immersed in the solution 1A again, and underwent the same steps as mentioned above. After the procedure from immersion in the solution 1A to oxidative polymerization was repeated 8 times, the resultant product was washed with hot water of 50°C for 10 minutes, and then dried at 100°C for 30 minutes, thereby forming the other electrode (counter electrode) comprising electroconducting poly(3,4-ethylenedioxythiophene).

Subsequently, a carbon layer and a silver paste layer were successively overlaid on the counter electrode. After mounting of a lead frame, the whole body was sealed with an epoxy resin to produce a chip capacitor. TABLE 10 shows the average capacitance and the average LC value of the chip capacitors (n = 50 units). The LC value was a value obtained at room temperature under a voltage of 6.3 V for one minute.

Example 42 (Reference only)

50 units of sintered bodies were prepared in the same manner as in Example 12. A voltage of 20 V was applied to each sintered body for 200 minutes in a 0.1% aqueous solution of phosphoric acid, whereby a dielectric oxide film was deposited on the surface of the sintered body by electrolytic forming. Then, the niobium sintered body was immersed in an aqueous solution containing ammonium persulfate in an amount of 25% by mass and sodium anthraquinone-2-sulfonate in an amount of 3% by mass (solution 1B), removed from the solution 1B, and dried at 80°C for 30 minutes, thereby forming a dielectric. Thereafter, the dielectric-deposited sintered body was immersed in an isopropanol solution containing 3,4-ethylenedioxythiophene in an amount of 18% by mass (solution 2), removed from the solution 2, and allowed to stand at 60°C for 10 minutes, thereby carrying out oxidative polymerization.

The resultant product was immersed in the solution 1B again, and underwent the same steps as mentioned above. After the procedure from immersion in the solution 1B to oxidative polymerization was repeated 8 times; the resultant product was washed with hot water of 50°C for 10 minutes, and then dried at 100 °C for 30 minutes, thereby forming the other electrode (counter electrode) comprising electroconducting poly(3,4-ethylenedioxythiophene).

Subsequently, a carbon layer and a silver paste layer were successively overlaid on the counter electrode. After mounting of a lead frame, the whole body was sealed with an epoxy resin to produce a chip capacitor. TABLE 10 shows the average capacitance and the average LC value of the chip capacitors (n = 50 units). The LC value was a value obtained at room temperature under a voltage of 6.3 V for one minute.

TABLE 10

| | Content of Nitrogen (% by mass) | Capacitance (μF) | LC (μA) | Number of Samples with LC of more than 100 μA |
|---|---|---|---|---|
| Example 34 | - | 539 | 25 | 0/50 |
| Example 35 | - | 506 | 50 | 0/50 |
| Example 36 | - | 440 | 17 | 0/50 |
| Example 37 | - | 491 | 69 | 0/50 |
| Example 38 | - | 763 | 67 | 0/50 |
| Example 39 | - | 548 | 26 | 0/50 |
| Example 40 | 0.28 | 621 | 40 | 0/50 |
| Comparative Example 6 | 0.02 | 399 | 46 | 1/50 |

(continued)

| | Content of Nitrogen (% by mass) | Capacitance (μF) | LC (μA) | Number of Samples with LC of more than 100 μA |
|---|---|---|---|---|
| Comparative Example 7 | 0.09 | 393 | 42 | 1/50 |
| Comparative Example 8 | 0.30 | 384 | 30 | 0/50 |
| Comparative Example 9 | 0.03 | 454 | 48 | 1/50 |
| Comparative Example 10 | 0.14 | 449 | 44 | 0/50 |
| Comparative Example 11 | 0.28 | 459 | 40 | 0/50 |
| Example 41 | 0.28 | 619 | 38 | 0/50 |
| Example 42 | - | 545 | 23 | 0/50 |

Example 43 (Reference only)

Using 93 g of a niobium ingot and 0.25 g of boron powder, a boron-containing niobium ingot (alloy) having a boron content of 2 mol% was produced by arc melting. In an SUS 304-made reactor, 50 g of the obtained ingot was placed and hydrogen was continuously introduced thereinto at 400°C for 10 hours. After cooling, the hydrogenated boron-containing niobium cake placed in an SUS 304-made pot containing SUS-made balls and pulverized for 10 hours. Thereafter, this hydride was formed into a 20 vol% slurry with water, charged together with zirconia balls into an SUS 304-made spike mill, and wet-pulverized at 10°C or less for 7 hours. The resulting slurry was subjected to centrifugal sedimentation and decanted to obtain a pulverized product. The pulverized product was dried in a vacuum under the conditions of $1.33\times10^2$ Pa and 50°C.

Subsequently, the hydrogenated boron-containing niobium powder was dehydrogenated under heating at $1.33\times10^{-2}$ Pa and 400°C for 1 hour. The produced boron-containing niobium powder had a mean particle size of 1.0 μm and the boron content thereof was measured by the atomic absorption analysis and found to be 2 mol%. The thus-obtained boron-containing niobium powder was granulated in a vacuum of $3.99\times10^{-3}$ Pa at 1,000°C. Thereafter, the granulated cake was pulverized to obtain a granulated powder having a mean particle size of 100 μm.

The thus-obtained boron-containing niobium granulated powder was molded together with a 0.3-mmϕ niobium lead wire to manufacture a molded article having a size of approximately 0.3×0.18×0.45 cm (weighing about 0.1 g).

This molded article was allowed to stand in a vacuum of $3.99\times10^{-3}$ Pa at 1,200°C for 30 minutes and thereby, a sintered body was obtained. The sintered body obtained was electrochemically formed in an aqueous 0.1% phosphoric acid solution at a temperature of 80°C for 200 minutes by applying a voltage, of 20 V to form a dielectric layer on the surface. Thereafter, the capacitance in 30% sulfuric acid and the leakage current (LC) in an aqueous 20% phosphoric acid solution were measured. The results obtained are shown in Table 11.

Examples 44 to 55: (Reference only)

In the above-described manufacture of a niobium sintered body comprising boron and aluminum, a powder of boron, aluminum, gallium, indium or thallium and a niobium ingot were used at an arbitrary ratio to produce niobium ingots containing boron, aluminum, gallium, indium or thallium by arc melting. Thereafter, 50 g of each ingot was pulverized using the same apparatus as in Example 43 by changing the pulverization time. Using the thus-obtained niobium powder containing boron and aluminum, sintered bodies were manufactured and each was measured on the capacitance and the LC value. The results obtained are shown in Table 11.

Comparative Examples 12 to 15 (Reference only)

For the purpose of comparison with Examples 43 to 55, four kinds of niobium powder not containing any of boron, aluminum, gallium, indium and thallium and having a different mean particle size were produced in the same manner as in Example 43. Using the produced niobium powder, sintered bodies were manufactured and measured on

the capacitance and the LC. The results obtained are shown in Table 11.

TABLE 11

| | | Composition (molar ratio) | | | | | | Mean Particle Size (μm) | Capacitance (μF•V/g) | LC (μA/g) |
|---|---|---|---|---|---|---|---|---|---|---|
| | | Nb | B | Al | Ga | In | Tl | | | |
| Ex. | 43 | 98 | 2.0 | - | - | - | - | 1.0 | 115000 | 28 |
| | 44 | 99 | - | 1.0 | - | - | - | 1.0 | 114000 | 33 |
| | 45 | 99 | - | - | 1.0 | | - | 1.0 | 115000 | 37 |
| | 46 | 99 | - | - | - | 1.0 | - | 1.0 | 116000 | 39 |
| | 47 | 99 | - | - | - | - | 1.0 | 1.0 | 114000 | 39 |
| | 48 | 98 | 1.0 | 1.0 | - | - | - | 1.0 | 115000 | 32 |
| | 49 | 98 | 0.5 | 1.5 | - | - | - | 1.0 | 114000 | 33 |
| | 50 | 98 | 1.5 | 0.5 | - | - | - | 1.0 | 116000 | 30 |
| | 51 | 98 | 2.0 | - | - | - | - | 0.1 | 540000 | 344 |
| | 52 | 98 | 2.0 | - | - | - | - | 0.5 | 240000 | 153 |
| | 53 | 98 | 2.0 | - | - | - | - | 0.7 | 155000 | 75 |
| | 54 | 98 | 2.0 | - | - | - | - | 1.3 | 95000 | 18 |
| | 55 | 98 | 2.0 | - | - | - | - | 3.2 | 35000 | 2 |
| Comp Ex. | 12 | 100 | - | - | - | - | - | 0.5 | 182000 | 2120 |
| | 13 | 100 | - | - | - | - | - | 0.7 | 120000 | 1074 |
| | 14 | 100 | - | - | - | - | - | 1.0 | 87000 | 424 |
| | 15 | 100 | - | - | - | - | - | 1.3 | 74000 | 233 |

Examples 56 to 63: (Reference only)

In order to change the boron content of the boron-containing niobium powder, boron-containing niobium ingots having a boron content of 0.02 to 9.8 mol% were produced by varying the amounts of niobium and boron processed by the arc melting. Thereafter, using 50 g of each of the boron-containing niobium ingots having respective boron concentrations, sintered bodies were manufactured by the same operation as in Example 1 and each was measured on the capacitance and the LC. The results obtained are shown in Table 12.

Comparative Examples 16 to 18

For the purpose of comparison with Examples 52 to 59, boron-containing niobium ingots having a boron content of 0mol% 13.3 mol% or 17.5 mol% were manufactured. Thereafter, using 50 g of each of the boron-containing niobium ingots having respective boron concentrations, sintered bodies were manufactured by the same operation as in Example 43 and each was measured on the capacitance and the LC. The results obtained are shown in Table 12.

TABLE 12

| | | Boron Content (mol%) | Mean Particle Size (μm) | Sintering Temp. (°C) | Capacitance (μF•V/g) | LC (μA/g) |
|---|---|---|---|---|---|---|
| Example | 56 | 0.02 | 1.0 | 1200 | 105000 | 52 |
| | 57 | 0.10 | 1.0 | 1200 | 112000 | 43 |
| | 58 | 1.1 | 1.0 | 1200 | 113000 | 36 |
| | 43 | 2.0 | 1.0 | 1200 | 115000 | 28 |
| | 59 | 3.0 | 1.0 | 1200 | 117000 | 28 |
| | 60 | 4.1 | 1.0 | 1200 | 116000 | 29 |
| | 61 | 5.2 | 1.0 | 1200 | 112000 | 32 |
| | 62 | 7.5 | 1.0 | 1200 | 105000 | 38 |
| | 63 | 9.8 | 1.0 | 1200 | 98000 | 43 |
| Comparative Example | 16 | 0.0 | 1.0 | 1200 | 88000 | 420 |
| | 17 | 13.3 | 1.0 | 1200 | 85000 | 49 |
| | 18 | 17.5 | 1.0 | 1200 | 79000 | 52 |

Examples 64 to 69 (Reference only)

In an SUS 304-made reactor, 100 g of a niobium ingot was placed and hydrogen was continuously introduced thereinto at 400°C for 10 hours. After cooling, the hydrogenated niobium cake was placed in an SUS 304-made pot containing SUS-made balls and pulverized for 10 hours. Thereafter, this hydride was formed into a 20 vol% slurry with water, charged together with zirconia balls into an SUS 304-made spike mill, and wet-pulverized for 7 hours. The resulting slurry was subjected to centrifugal sedimentation and decanted to obtain a pulverized product. The pulverized product was dried in a vacuum under the conditions of $1.33\times10^{2}$ Pa and 50°C. Subsequently, the hydrogenated niobium powder was dehydrogenated under heating at $1.33\times10^{-2}$ Pa and 400°C for 1 hour. The manufactured niobium powder had a mean particle size of 1.1 μm. Into this niobium powder, any one of niobium diboronate, boron oxide and boron metal each having a mean particle size of about 1 μm was mixed at an arbitrary ratio. The obtained boron-containing niobium powder was granulated in a vacuum of $3.99\times10^{-3}$ Pa at 1,050°C. Thereafter, the granulated cake was pulverized to obtain a granulated powder having a mean particle size of 90 μm. The thus-obtained boron-containing niobium granulated powder was molded together with a 0.3-mmϕ niobium lead wire to manufacture a molded article having a size of approximately $0.3\times0.18\times0.45$ cm (weighing about 0.1 g). Subsequently, these moulded articles were allowed to stand in a vacuum of $3.99\times10^{-3}$ Pa at 1,200°C for 30 minutes to obtain sintered bodies. The resulting sintered bodies each was electrochemically formed in an aqueous 0.1% phosphoric acid solution at a temperature of 80°C for 200 minutes by applying a voltage of 20 V to form a dielectric layer on the surface. Thereafter, the capacitance in 30% sulfuric acid and the LC in an aqueous 20% phosphoric acid solution were measured. The results obtained are shown in Table 13.

TABLE 13

| | | Species of Boron | Boron Content (mol%) | Capacitance (μF•V/g) | LC (μA/g) |
|---|---|---|---|---|---|
| Example | 64 | $NbB_2$ | 2.9 | 117000 | 30 |
| | 65 | $NbB_2$ | 1.2 | 112000 | 38 |
| | 66 | $BO_3$ | 3.8 | 113000 | 34 |
| | 67 | $BO_3$ | 2.2 | 112000 | 32 |
| | 68 | B | 0.5 | 112000 | 38 |
| | 69 | B | 1.1 | 114000 | 39 |

Examples 70 to 74: (Reference only)

In order to obtain a boron-containing niobium nitride, 10 g of boron-containing niobium powder containing 3.2

mol% of boron and having a mean particle size of 0.9 μm was manufactured in the same manner as in Example 43 and charged into an SUS 304-made reactor and thereinto, nitrogen was continuously introduced at 300°C for 0.5 to 20 hours to obtain boron-containing niobium nitrides. The nitrogen amount of each nitride was determined using a nitrogen amount measuring apparatus manufactured by LECO which determines the nitrogen amount from the thermal conductivity. The ratio of the measured value to the separately measured mass of powder was designated as the nitrided amount. The nitrided amount here was from 0.02 to 0.89% by mass.

The thus-obtained boron-containing niobium nitrides each was granulated, molded and sintered in the same manner as in Example 43 and each sintered body obtained was electrochemically formed in an aqueous 0.1% phosphoric acid solution at a temperature of 80°C for 200 minutes by applying a voltage of 20 V to form a dielectric layer on the surface. Thereafter, the capacitance in 30% sulfuric acid and the LC value in an aqueous 20% phosphoric acid solution were measured. The results obtained are shown in Table 14.

TABLE 14

| | | Boron Content (mol%) | Nitrogen Content (mass %) | Capacitance (μF•V/g) | LC (μA/g) |
|---|---|---|---|---|---|
| Ex. | 70 | 3.2 | 0.02 | 129000 | 31 |
| | 71 | 3.2 | 0.10 | 128000 | 30 |
| | 72 | 3.2 | 0.28 | 128000 | 28 |
| | 73 | 3.2 | 0.43 | 127000 | 33 |
| | 74 | 3.2 | 0.89 | 128000 | 39 |

Examples 75 and 76: (Reference only)

In order to obtain a sintered body comprising a mixture of boron-containing niobium powder and niobium powder, boron-containing niobium powder containing 6.9 mol% of boron and having a mean particle size of 1.0 μm was obtained in the same manner as in Example 43.

Separately, into a nickel-made crucible, 20 g of potassium fluoroniobate thoroughly dried in a vacuum at 80°C and sodium in a molar amount of 10 times the potassium fluoroniobate were charged and allowed to perform a reduction reaction at 1,000°C for 20 hours in an argon atmosphere. After the completion of reaction, the reduction product was cooled, washed with water, washed with 95% sulfuric acid and then with water in sequence, dried in a vacuum and pulverized for 40 hours using a ball mill of an alumina pot containing silica alumina balls. The pulverized product was dipped and stirred in a 3:2 (by mass) mixed solution of 50% nitric acid and 10% aqueous hydrogen peroxide. Thereafter, the pulverized product was thoroughly washed with water until the pH reached 7 to remove impurities, and dried in a vacuum. The produced niobium powder had a mean particle size of 1.2 μm.

The thus-obtained boron-containing niobium powder was thoroughly mixed with niobium powder at a ratio shown in Table 15 and the resulting mixtures each was granulated, molded and sintered in the same manner as in Example 1 to obtain sintered bodies. The capacitance and the LC value of each sintered body were measured and the results obtained are shown in Table 15.

Examples 77 to 80 (Reference only)

In order to obtain a sintered body of boron-containing niobium nitride comprising a mixture of boron-containing niobium powder and niobium powder, boron-containing niobium powder containing 6.9 mol% of boron and having a mean particle size of 1.0 μm was obtained in the same manner as in Example 43. Separately, 50 g of a niobium ingot was placed in an SUS 304-made reactor and hydrogen was continuously introduced thereinto at 400°C for 12 hours. After cooling, the hydrogenated niobium cake was placed in an SUS 304-made pot containing iron-made balls and pulverized for 10 hours. This pulverized product was charged into the same SUS 304-made reactor as above and again hydrogenated under the above-described conditions. Thereafter, this hydride was formed into a 20 vol% slurry with water, charged together with zirconia balls into an SUS 304-made spike mill, and wet-pulverized for 6 hours.

The resulting slurry was centrifuged and decanted to obtain a pulverized product. The pulverized product was dried in a vacuum under the conditions of $1.33 \times 10^2$ Pa and 50°C. Subsequently, the hydrogenated niobium powder was dehydrogenated under heating in a vacuum of $1.33 \times 10^{-2}$ Pa at 400°C for 1 hour. The manufactured niobium powder had a mean particle size of 1.1 μm.

The thus-obtained boron-containing niobium powder was thoroughly mixed with niobium powder at an arbitrary ratio and after obtaining nitrides in the same manner as in Example 68, the nitrides each was granulated, molded and

sintered to obtain sintered bodies. The capacitance and the LC value of each sintered body were measured and the results obtained are shown in Table 15.

TABLE 15

| | | Type of Niobium Powder | Mixing ratio (boron-contain ing niobium powder : niobium powder) | Capacitance (μF•V/g) | LC (μA/g) |
|---|---|---|---|---|---|
| Ex. | 75 | Reduced powder | 90:10 | 109000 | 36 |
| | 76 | Reduced powder | 50:50 | 117000 | 28 |
| | 77 | Reduced powder | 10:90 | 111000 | 41 |
| | 78 | Pulverized powder | 80:20 | 113000 | 33 |
| | 79 | Pulverized powder | 40:60 | 116000 | 27 |
| | 80 | Pulverized powder | 20:80 | 114000 | 36 |

Examples 81 and 82 (Reference only)

50 Units of sintered bodies were prepared in each of Example 81 and Example 82 in same manner as in Example 43 and Example 44, respectively. These sintered bodies each was electrochemically formed using an aqueous 0.1% phosphoric acid solution at a voltage of 20 V for 200 minutes to form an oxide dielectric film on the surface. Subsequently, an operation of dipping each sintered body in an aqueous 60% manganese nitrate solution and then heating it at 220°C for 30 minutes was repeated to form a manganese dioxide layer as the other electrode (counter electrode) layer on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 16. The LC value is a value measured at room temperature by applying a voltage of 6.3 V for 1 minute.

Examples 83 and 84 (Reference only)

50 Units of sintered bodies were prepared in each of Example 83 and Example 84 in same manner as in Example 53 and Example 48, respectively. These sintered bodies each was electrochemically formed using an aqueous 0.1% phosphoric acid solution at a voltage of 20 V for 200 minutes to form an oxide dielectric film on the surface. Subsequently, an operation of dipping each sintered body in a mixed solution of an aqueous 35% lead acetate solution and an aqueous 35% ammonium persulfate solution (1:1 by volume) and then allowing the reaction to proceed at 40°C for 1 hour was repeated to form a mixed layer of lead dioxide and lead sulfate as the other electrode (counter electrode) layer on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 16. The LC value is a value measured at room temperature by applying a voltage of 6.3 V for 1 minute.

Examples 85 to 88 (Reference only)

50 Units of sintered bodies were prepared in each of Example 85, Example 86, Example 87 and Example 88 in same manner as in Example 58, Example 49, Example 67 and Example 71, respectively. These sintered bodies each was electrochemically formed using an aqueous 0.1% phosphoric acid solution at a voltage of 20 V for 200 minutes to form an oxide dielectric film on the surface. Subsequently, an operation of contacting the oxide dielectric film with an equivalent-mass mixed solution of an aqueous 10% ammonium persulfate solution and an aqueous 0.5% anthraquinone-

sulfonic acid solution and then with a pyrrole vapor was repeated at least 5 times, whereby the other electrode (counter electrode) comprising polypyrrole was formed on the oxide dielectric film.

On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 16. The LC value is a value measured at room temperature by applying a voltage of 6.3 V for 1 minute.

Examples 89 to 93 (Reference only)

50 Units of sintered bodies were prepared in each of Example 89, Example 90, Example 91, Example 92 and Example 93 in same manner as in Example 59, Example 50, Example 65, Example 72 and Example 76, respectively. These sintered bodies each was electrochemically formed using an aqueous 0.1% phosphoric acid solution at a voltage of 20 V for 200 minutes to form an oxide dielectric film on the surface. Subsequently, the niobium sintered body was dipped into an aqueous solution containing 25% by mass of ammonium persulfate (Solution 1), then pulled up and dried at 80°C for 30 minutes. Thereafter, the sintered body having formed thereon a dielectric material was dipped in an isopropanol solution containing 18% by mass of 3,4-ethylenedioxythiophene (Solution 2), then pulled up and left standing in an atmosphere of 60°C for 10 minutes to allow the oxidation-polymerization to proceed. The resulting sintered body was again dipped in Solution 1 and then treated in the same manner as above. The operation from the dipping in Solution 1 until the oxidation polymerization was repeated 8 times. Then, the sintered body was washed with hot water at 50°C for 10 minutes and dried at 100°C for 30 minutes, whereby the other electrode (counter electrode) comprising electrically conducting poly(3,4-ethylenedioxythiophene) was formed.

On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 16. The LC value is a value measured at room temperature by applying a voltage of 6.3 V for 1 minute.

Comparative Examples 18 to 20 (Reference only)

Into a nickel-made crucible, 20 g of potassium fluoroniobate thoroughly dried in a vacuum at 80°C and sodium in a molar amount of 10 times the potassium fluoroniobate were charged and allowed to perform a reduction reaction at 1, 000°C for 20 hours in an argon atmosphere. After the completion of reaction, the reduction product was cooled, washed with water, washed with 95% sulfuric acid and then with water in sequence, dried in a vacuum and pulverized for 40 hours using a ball mill of an alumina pot containing silica alumina balls. The pulverized product was dipped and stirred in a 3:2 (by mass) mixed solution of 50% nitric acid and 10% aqueous hydrogen peroxide. Thereafter, the pulverized product was thoroughly washed with water until the pH reached 7 to remove impurities, and dried in a vacuum. The manufactured niobium powder had a mean particle size of 1.3 μm. Into an SUS 304-made reactor, 30 g of the thus-obtained niobium powder was charged and thereinto, nitrogen was continuously introduced at 300°C for 0.5 to 4 hours to obtain niobium nitrides. The nitrogen amount of each nitride was determined using the nitrogen amount measuring apparatus manufactured by LECO which determines the nitrogen amount from the thermal conductivity. The ratio of the measured value to the separately measured mass of powder was designated as the nitrided amount, as a result, the nitrided amount here was from 0.02 to 0.30%, by mass. Each niobium nitride was granulated, molded and sintered in the same manner as in Example 43 to obtain a sintered body. The thus-obtained 50 units of sintered bodies each was electrochemically formed using an aqueous 0.1% phosphoric acid solution at a voltage of 20 V for 200 minutes to form an oxide dielectric film on the surface. Thereafter, an operation of dipping the sintered body in an aqueous 60% manganese nitrate solution and then heating it at 220°C for 30 minutes was repeated to form a manganese dioxide layer as the other electrode (counter electrode) layer on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 16. The LC value is a value measured at room temperature by applying a voltage of 6.3 V for 1 minute.

Comparative Examples 21 to 23 (Reference only)

In an SUS 304-made reactor, 50 g of a niobium ingot was placed and thereinto, hydrogen was continuously introduced at 400°C for 12 hours. After cooling, the hydrogenated niobium cake was placed in an SUS 304-made pot containing iron-made balls and pulverized for 10 hours. This pulverized product was charged into the same SUS 304-made reactor as above and again hydrogenated under the above-described conditions. Thereafter, this hydride was formed into a 20 vol% slurry with water, charged together with zirconia balls into an SUS 304-made wet grinding machine

("Atritor", trade name), and wet-pulverized for 6 hours. The resulting slurry was subjected to centrifugal sedimentation decanted to obtain a pulverized product. The pulverized product was vacuum-dried in a vacuum of $1.33\times10^{2}$ Pa at 50°C. Subsequently, the hydrogenated niobium powder was dehydrogenated under heating in a vacuum of $1.33\times10^{-2}$ Pa at 400°C for 1 hour. The manufactured niobium powder had a mean particle size of 1.0 μm. Into an SUS 304-made reactor, 30 g of the obtained niobium powder was charged and thereinto, nitrogen was continuously introduced at 300°C for 0.5 to 3 hours to obtain niobium nitrides. The nitrogen amount of each nitride was determined using a nitrogen amount measuring apparatus manufactured by LECO which determines the nitrogen amount from the thermal conductivity. The ratio of the measured value to the separately measured mass of powder was designated as the nitrided amount, as a result, the nitrided amount here was from 0.03 to 0.28% by mass. Each niobium nitride was granulated, molded and sintered in the same manner as in Example 43 to obtain a sintered body. The thus-obtained 50 units of sintered bodies each was electrochemically formed using an aqueous 0.1% phosphoric acid solution at a voltage of 20 V for 200 minutes to form an oxide dielectric film on the surface. Thereafter, an operation of contacting the oxide dielectric film with an equivalent-mass mixed solution of an aqueous 10% ammonium persulfate solution and an aqueous 0.5% anthraquinone sulfonic acid solution and then with a pyrrole vapor was repeated at least 5 times, whereby counter electrode comprising polypyrrole was formed on the oxide dielectric film. On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 16. The LC value is a value measured at room temperature by applying a voltage of 6.3 V for 1 minute.

TABLE 16

| | | Nitrogen Content (mass %) | Capacitance (μF) | LC (μA) | Number of Units Having LC Exceeding 100 μA |
|---|---|---|---|---|---|
| Example | 81 | - | 529 | 17 | 0/50 |
| | 82 | - | 513 | 23 | 0/50 |
| | 83 | - | 690 | 53 | 0/50 |
| | 84 | - | 500 | 22 | 0/50 |
| | 85 | - | 480 | 21 | 0/50 |
| | 86 | - | 513 | 23 | 0/50 |
| | 87 | - | 520 | 25 | 0/50 |
| | 88 | 0.10 | 557 | 22 | 0/50 |
| | 89 | - | 521 | 20 | 0/50 |
| | 90 | - | 528 | 22 | 0/50 |
| | 91 | - | 493 | 28 | 0/50 |
| | 92 | - | 589 | 20 | 0/50 |
| | 93 | 0.28 | 527 | 18 | 0/50 |
| Comparative Example | 18 | 0.02 | 399 | 46 | 1/50 |
| | 19 | 0.09 | 393 | 42 | 1/50 |
| | 20 | 0.30 | 384 | 30 | 0/50 |
| | 21 | 0.03 | 454 | 48 | 1/50 |
| | 22 | 0.14 | 449 | 44 | 0/50 |
| | 23 | 0.28 | 459 | 40 | 0/50 |

Example 94

Using 92 g of a niobium ingot and 1.9 g of rhenium powder, a rhenium-containing niobium ingot (alloy) having a rhenium content of 1 mol%, was produced by arc melting. In an SUS 304-made reactor, 50 g of the obtained ingot was placed and hydrogen was continuously introduced thereinto at 400°C for 10 hours. After cooling, the hydrogenated

rhenium-containing niobium cake was placed in an SUS 304-made pot containing SUS-made balls and pulverized for 10 hours. Thereafter, this hydride was formed into a 20 vol% slurry with water, charged together with zirconia balls into an SUS 304-made spike mill, and wet-pulverized at 10°C or less for 7 hours. The resulting slurry was subjected to centrifugal sedimentation and decanted to obtain a pulverized product. The pulverized product was dried in a vacuum under the conditions of $1.33\times10^{2}$ Pa and 50°C.

Subsequently, the hydrogenated rhenium-containing niobium powder was dehydrogenated under heating at $1.33\times10^{-2}$ Pa and 400°C for 1 hour. The produced rhenium-containing niobium powder had a mean particle size of 1 μm and the rhenium content thereof was measured by the atomic absorption analysis and found to be 1 mol%. The thus-obtained rhenium-containing niobium powder was granulated in a vacuum of $4\times10^{-3}$ Pa at 1,000°C. Thereafter, the granulated cake was pulverized to obtain a granulated powder having a mean particle size of 100 μm.

The thus-obtained rhenium-containing niobium granulated powder was molded together with a 0.3-mmϕ niobium lead wire to manufacture a molded article having a size of approximately 0.3×0.18×0.45 cm (weighing about 0.1 g).

This molded article was allowed to stand in a vacuum of $4\times10^{-3}$ Pa at 1,200°C for 30 minutes and thereby, a sintered body was obtained. The sintered body obtained was electrochemically formed in an aqueous 0.1% phosphoric acid solution at a temperature of 80°C for 200 minutes by applying a voltage of 20 V to form a dielectric layer on the surface. Thereafter, the capacitance in 30% sulfuric acid and the leakage current (hereinafter simply referred to as "LC") in an aqueous 20% phosphoric acid solution were measured. The results obtained are shown in Table 17.

Examples 95 to 117

In the above-described manufacture of a niobium sintered body comprising at least one element.of cerium, neodymium, titanium, rhenium, ruthenium, rhodium, palladium, silver, zinc, silicon, germanium, tin, phosphorus, arsenic and bismuth, a powder of cerium, neodymium, titanium, rhenium, ruthenium, rhodium, palladium, silver, zinc, silicon, germanium, tin, phosphorus, arsenic or bismuth and a niobium ingot were used at an arbitrary ratio and niobium ingots containing at least one element of cerium, neodymium, titanium, rhenium, ruthenium, rhodium, palladium, silver, zinc, silicon, germanium, tin, phosphorus, arsenic and bismuth were produced by arc melting. Thereafter, 50 g of each ingot was pulverized using the same apparatus as in Example 1 by changing the pulverization time. Using the thus-obtained niobium powder containing cerium, neodymium, titanium, rhenium, ruthenium, rhodium, palladium, silver, zinc, silicon, germanium, tin, phosphorus, arsenic or bismuth, sintered bodies were manufactured and each was measured on the capacitance and LC. The results obtained are shown in Table 17.

Rhenium has an effect of giving a lowest leakage current value and zinc, arsenic, phosphorus, germanium and tin follow in this order. The leakage current value is almost the same among cerium, neodymium, titanium, ruthenium, rhodium, palladium, silver, silicon and bismuth, and follows that of tin. Accordingly, in the present invention, the niobium powder most preferably contains rhenium and next preferably zinc.

Comparative Examples 24 to 27

For the purpose of comparison with Examples 94 to 117, four kinds of niobium powder not containing any of cerium, neodymium, titanium, rhenium, ruthenium, rhodium, palladium, silver, zinc, silicon, germanium, tin, phosphorus, arsenic and bismuth and having a different mean particle size were produced in the same manner as in Example 94. Using the produced niobium power, sintered bodies were manufactured and measured on the capacitance and LC. The results obtained are shown in Table 17.

Table 17

| | | Composition(Molar ratio) | Mean Particle Size (μm) | Capacitance (μF•V/g) | LC (μ A/g) |
|---|---|---|---|---|---|
| | 94 | Nb(99.0), Re(1.0) | 1.0 | 113000 | 25 |
| | 95 | Nb(99.9), Zn(0.1) | 1.0 | 105000 | 25 |
| | 96 | Nb(99.0), As(1.0) | 1.0 | 104000 | 26 |
| | 97 | Nb(98.0), P(2.0) | 1.0 | 105000 | 29 |
| | 98 | Nb(99.0), Ge(1.0) | 1.0 | 100000 | 38 |
| | 99 | Nb(99.0), Sn(1.0) | 1.0 | 101000 | 39 |
| | 100 | Nb(99.0), Ce (1.0) | 1.0 | 92000 | 43 |
| | 101 | Nb(99.0), Nd(1.0) | 1.0 | 94000 | 40 |

(continued)

| | | Composition(Molar ratio) | Mean Particle Size ($\mu$m) | Capacitance ($\mu$F•V/g) | LC ($\mu$ A/g) |
|---|---|---|---|---|---|
| Ex. | 102 | Nb(99.7), Ti (0.3) | 1.0 | 89000 | 39 |
| | 103 | Nb(99.9), Ru(0.1) | 1.0 | 90000 | 44 |
| | 104 | Nb(99.8), Rh(0.2) | 1.0 | 92000 | 39 |
| | 105 | Nb(99.8), Pd(0.2) | 1.0 | 88000 | 40 |
| | 106 | Nb(99.9), Ag(0.1) | 1.0 | 90000 | 42 |
| | 107 | Nb(94.0), Si(6.0) | 1.0 | 95000 | 44 |
| | 108 | Nb(99.8), Bi(0.2) | 1.0 | 91000 | 42 |
| | 109 | Nb(95.0), Re(1.0), P(4.0) | 1.0 | 115000 | 29 |
| | 110 | Nb(97.0), Re(0.5), As(2.5) | 1.0 | 111000 | 27 |
| | 111 | Nb(99.0), Re(0.3), Ge(0.7) | 1.0 | 113000 | 26 |
| | 112 | Nb(98.5), Re(1.0), Sn(0.5) | 1.0 | 112000 | 29 |
| | 113 | Nb(92.0), Re(0.5), Si(7.5) | 1.0 | 118000 | 44 |
| | 114 | Nb(98.0), Re(0.8), Zn(0.2), Ge(1.0) | 1.0 | 113000 | 22 |
| | 115 | Nb(99.0), Re(1.0) | 0.5 | 246000 | 126 |
| | 116 | Nb(99.0), Re(1.0) | 0.7 | 162000 | 55 |
| | 117 | Nb(99.0), Re(1.0) | 1.3 | 96000 | 12 |
| Comp Ex. | 24 | Nb(100) | 0.5 | 182000 | 2120 |
| | 25 | Nb(100) | 0.7 | 120000 | 1074 |
| | 26 | Nb(100) | 1.0 | 87000 | 424 |
| | 27 | Nb(100) | 1.3 | 74000 | 233 |

Examples 95, 96, 97, 98, 99, 102, 107, and 108 do not belong to the scope of the present invention

Examples 118 to 122

In order to change the rhenium content of the rhenium-containing niobium powder, rhenium-containing niobium ingots having a rhenium content of 0.01 to 7 mol% were produced while varying the amounts of niobium and rhenium processed by the arc melting. Thereafter, using 50 g of each of the rhenium-containing niobium ingots having respective rhenium concentrations, sintered bodies were manufactured by the same operation as in Example 94 and each was measured on the capacitance and LC. The results obtained are shown in Table 18.

Comparative Examples 28 to 30

For the purpose of comparison with Example 94 and Examples 118 to 122, rhenium-containing niobium, ingots containing 0 mol%, 11 mol% or 18 mol% of rhenium were produced. Thereafter, using 50 g of each of the rhenium-containing niobium ingots having respective rhenium concentrations, sintered bodies were manufactured by the same operation as in Example 94 and each was measured on the capacitance and LC. The results obtained are shown in Table 18.

TABLE 18

| | Rhenium Content (mol%) | Mean Particle Size ($\mu$m) | Sintering Temperature (°C) | Capacitance ($\mu$F•V/g) | LC ($\mu$A/g) |
|---|---|---|---|---|---|
| Example 118 | 0.01 | 1.0 | 1200 | 95000 | 65 |
| Example 119 | 0.10 | 1.0 | 1200 | 106000 | 39 |

(continued)

| | Rhenium Content (mol%) | Mean Particle Size (μm) | Sintering Temperature (°C) | Capacitance (μF•V/g) | LC (μA/g) |
|---|---|---|---|---|---|
| Example 94 | 1.0 | 1.0 | 1200 | 113000 | 25 |
| Example 120 | 2.0 | 1.0 | 1200 | 112000 | 28 |
| Example 121 | 3.0 | 1.0 | 1200 | 113000 | 26 |
| Example 122 | 7.0 | 1.0 | 1200 | 109000 | 32 |
| Comparative Example 28 | 0.0 | 1.0 | 1200 | 86000 | 420 |
| Comparative Example 29 | 11.0 | 1.0 | 1200 | 85000 | 59 |
| Comparative Example 30 | 18.1 | 1.0 | 1200 | 80000 | 62 |

Examples 123 to 128

In an SUS 304-made reactor, 100 g of a niobium ingot was placed and hydrogen was continuously introduced thereinto at 400°C for 10 hours. After cooling, the hydrogenated niobium cake was placed in an SUS 304-made pot containing SUS-made balls and pulverized for 10 hours. Thereafter, this hydride was formed into a 20 vol% slurry with water/charged together with zirconia balls into an SUS 304-made spike mill, and wet-pulverized for 7 hours. The resulting slurry was subjected to centrifugal sedimentation and decanted to obtain a pulverized product. The pulverized product was dried in a vacuum under the conditions of $1.33\times10^2$ Pa and 50°C. Subsequently, the hydrogenated niobium powder was dehydrogenated under heating at $1.33\times10^{-2}$ Pa and 400°C for 1 hour. The manufactured niobium powder had a mean particle size of 1.1 μm.

Into this niobium powder, any one of rhenium oxide, rhenium sulfide and rhenium metal each having a mean particle size of about 1 μm was mixed at an arbitrary ratio. The obtained rhenium-containing niobium powder was granulated in a vacuum of $4\times10^{-3}$ Pa at 1,050°C. Thereafter, the granulated cake was cracked to obtain a granulated powder having a mean particle size of 90 μm. The thus-obtained rhenium-containing niobium granulated powder was molded together with a 0.3-mmϕ niobium lead wire to manufacture a molded article having a size of approximately $0.3\times0.18\times0.45$ $cm^3$ (weighing about 0.1 g). Subsequently, these molded articles were allowed to stand in a vacuum of $4\times10^{-3}$. Pa at 1,200°C for 30 minutes to obtain sintered bodies. The resulting sintered bodies each was electrochemically formed in an aqueous 0.1% phosphoric acid solution at a temperature of 80°C for 200 minutes by applying a voltage of 20 V to form a dielectric layer on the surface. Thereafter, the capacitance in 30% sulfuric acid and the LC in an aqueous 20% phosphoric acid solution were measured. The results obtained are shown in Table 19.

Table 19

| | Species of Rhenium | Rhenium Content (mol%) | Capacitance (μF•V/g) | LC (μA/g) |
|---|---|---|---|---|
| Example 123 | $ReO_2$ | 2.8 | 115000 | 27 |
| Example 124 | $ReO_3$ | 1.2 | 112000 | 25 |
| Example 125 | $Re_2O_7$ | 3.5 | 114000 | 26 |
| Example 126 | $ReS_2$ | 2.3 | 115000 | 29 |
| Example 127 | $Re_2S_7$ | 0.5 | 112000 | 31 |
| Example 128 | Re | 1.0 | 114000 | 25 |

Examples 129 to 133

In order to obtain a rhenium-containing niobium nitride, 10 g of rhenium-containing niobium powder containing 0.9 mol% of rhenium and having a mean particle seize of 0.9 μm was manufactured in the same manner as in Example 94 and charged into an SUS 304-made reactor and thereinto, nitrogen was continuously introduced at 300°C for 0.5 to 20 hours to obtain rhenium-containing niobium nitrides. The nitrogen amount of each nitride was determined using a

nitrogen amount measuring apparatus manufactured by LECO, which determines the nitrogen amount from the thermal conductivity. The ratio of the measured value to the separately measured mass of powder was designated as the nitrided amount. The nitrided amount here was from 0.02 to 0.79% by mass.

The thus-obtained rhenium-containing niobium nitrides each was granulated, molded and sintered in the same manner as in Example 94 and each sintered body obtained was electrochemically formed in an aqueous 0.1% phosphoric acid solution at a temperature of 80°C for 200 minutes by applying a voltage of 20 V to form a dielectric layer on the surface. Thereafter, the capacitance in 30% sulfuric acid and the LC value in an aqueous 20% phosphoric acid solution were measured. The results obtained are shown in Table 20.

TABLE 20

| | Rhenium Content (mol%) | Nitrogen Content (mass %) | Capacitance (μF•V/g) | LC (μA/g) |
|---|---|---|---|---|
| Example 129 | 0.9 | 0.02 | 124000 | 28 |
| Example 130 | 0.9 | 0.11 | 125000 | 25 |
| Example 131 | 0.9 | 0.27 | 125000 | 22 |
| Example 132 | 0.9 | 0.45 | 124000 | 22 |
| Example 133 | 0.9 | 0.79 | 125000 | 35 |

Examples 134 to 136

In order to obtain a sintered body comprising a mixture of rhenium-containing niobium powder and niobium powder, a rhenium-containing niobium powder containing 10 mol% of rhenium and having a mean particles size of 1. 0 μm was obtained in the same manner as in Example 94.

Separately, into a nickel-made crucible, 2,000 g of potassium fluoroniobate thoroughly dried in a vacuum at 80°C and sodium in a molar amount of 10 times the potassium fluoroniobate, were charged and allowed to perform a reduction reaction at 1, 000°C for 20 hours in an argon atmosphere. After the completion of reaction, the reduction product was cooled, washed with water, washed with 95% sulfuric acid and then with water in sequence, dried in a vacuum and pulverized for 40 hours using a ball mill of an alumina pot containing silica alumina balls. The pulverized product was dipped and stirred in a 3:2 (by mass) mixed solution of 50% nitric acid and 10% aqueous hydrogen peroxide. Thereafter, the pulverized product was thoroughly washed with water until the pH reached 7 to remove impurities, and dried in a vacuum. The produced niobium powder had a mean particle size of 1.2 μm.

The thus-obtained rhenium-containing niobium powder was thoroughly mixed with niobium powder at a ratio shown in Table 21 and the resulting mixtures each was granulated, molded and sintered in the same manner as in Example 94 to obtain sintered bodies. The capacitance and the LC value of each sintered body were measured and the results obtained are shown in Table 21.

Examples 137 to 139

In order to obtain a sintered body of rhenium-containing niobium nitride comprising a mixture of rhenium-containing niobium powder and niobium powder, rhenium-containing niobium powder containing 10 mol% of rhenium and having a mean particle size of 1. 0 μm was obtained in the same manner as in Example 94. Separately, 50 g of a niobium ingot was placed in an SUS 304-made reactor and hydrogen was continuously introduced thereinto at 400°C for 12 hours. After cooling, the hydrogenated niobium cake was placed in an SUS 304-made pot containing iron-made balls and pulverized for 10 hours. This pulverized product was charged into the same SUS 304-made reactor as above and again hydrogenated under the above-described conditions. Thereafter, this hydride was formed into a 20 vol% slurry with water, charged together with zirconia balls into an SUS 304-made spike mill, and wet-pulverized for 6 hours.

The resulting slurry was subjected to centrifugal sedimentation and decanted to obtain a pulverized product. The pulverized product was dried in a vacuum under the condition of $1.33 \times 10^2$ Pa and 50°C. Subsequently, the hydrogenated niobium powder was dehydrogenated under heating in a vacuum of $133 \times 10^{-2}$ Pa at 400°C for 1 hour. The manufactured niobium powder had a mean particle size of 1.1 μm.

The thus-obtained rhenium-containing niobium powder was thoroughly mixed with niobium powder at an arbitrary ratio and after obtaining nitrides in the same manner as in Example 131, the nitrides each was granulated, molded and sintered to obtain sintered bodies. The capacitance and the LC value of each sintered body were measured and the results obtained are shown in Tape 21.

Table 21

| | Type of Niobium Powder | Mixing Ratio (rhenium-containing niobium powder : niobium powder) | Capacitance (μF•V/g) | LC (μA/g) |
|---|---|---|---|---|
| Example 134 | Reduced powder | 90:10 | 104000 | 45 |
| Example 135 | Reduced powder | 50:50 | 110000 | 41 |
| Example 136 | Reduced powder | 10:90 | 114000 | 26 |
| Example 137 | Pulverized powder | 80:20 | 104000 | 46 |
| Example 138 | Pulverized powder | 40:60 | 111000 | 38 |
| Example 139 | Pulverized powder | 20:80 | 115000 | 25 |

Examples 140 and 141

50 Units of sintered bodies were prepared in each of Example 140 and Example 141 in the same manner as in Example 94 and Example 116, respectively. These sintered bodies each was electrochemically formed using an aqueous 0.1% phosphoric acid solution at a voltage of 20 V for 200 minutes to form an oxide dielectric film on the surface. Subsequently, an operation of dipping each sintered body in an aqueous 60% manganese nitrate solution and then heating it at 220°C for 30 minutes was repeated to form a manganese dioxide layer as the other electrode (counter electrode) layer on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 22. The LC value is a value measured at room temperature by applying a voltage of 6.3 V for 1 minute.

Examples 142 and 143

50 Units of sintered bodies were prepared in each of Example 142 and Example 143 in the same manner as in Example 95 and Example 128, respectively. These sintered bodies each was electrochemically formed using an aqueous 0.1% phosphoric acid solution at a voltage of 20 V for 200 minutes to form an oxide dielectric film on the surface. Subsequently, an operation, of dipping each sintered body in a mixed solution of an aqueous 35% lead acetate solution and an aqueous 35% ammonium persulfate solution (1:1 by volume) and then allowing the reaction to proceed at 40°C for 1 hour was repeated to form a mixed layer of lead dioxide and lead sulfate as the other electrode (counter electrode) on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 22. The LC value is a value measured at room temperature by applying a voltage of 6.3 V for 1 minutes.

Examples 144 to 147

50 Units of sintered bodies were prepared in each of Example 144, Example 145, Example 146 and Example 147 in the same manner as in Example 96, Example 115, Example 132 and Example 97, respectively. These sintered bodies each was electrochemically formed using an aqueous 0.1% phosphoric acid solution at a voltage of 20 V for 200 minutes to form an oxide dielectric film on the surface. Subsequently, an operation of contacting the oxide dielectric film with an equivalent-mass mixed solution of an aqueous 10% ammonium persulfate solution and an aqueous 0.5% anthraquinone-sulfonic acid solution and then with a pyrrole vapor was repeated at least 5 times, whereby the other electrode (counter electrode) comprising polypyrrole was formed on the oxide dielectric film.

On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 22. The LC value is a value measured at room temperature by applying a voltage of 6.3 V for 1 minute.

Examples 148 to 153

50 Units of sintered bodies were prepared in each of Example 148, Example 149, Example 150, Example 151, Example 152 and Example 153 in the same manner as in Example 114, Example 122, Example 123, Example 124, Example 131 and Example 136, respectively. These sintered bodies each was electrochemically formed using an aqueous 0.1% phosphoric acid solution at a voltage of 20 V for 200 minutes to form an oxide dielectric film on the surface. Subsequently, the niobium sintered body was dipped into an aqueous solution containing 25% by mass of ammonium persulfate (Solution 1), then pulled up and dried at 80°C for 30 minutes. Thereafter, the sintered body having formed thereon a dielectric material was dipped, in an isopropanol solution containing 18% by mass of 3,4-ethylenedioxythiophene (Solution 2), then pulled up and left standing in an atmosphere of 60°C for 10 minutes to allow the oxidation-polymerization to proceed. The resulting sintered body was again dipped in Solution 1 and then treated in the same manner as above. The operation from the dipping in Solution 1 until the oxidation polymerization was repeated 8 times. Then, the sintered body was washed with hot water at 50°C for 10 minutes and dried at 100°C for 30 minutes, whereby the other electrode (counter electrode) comprising electrically conducing poly(3,4-ethylenedioxythiophene) was formed.

On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 22. The LC value is a value measured at room temperature by applying a voltage of 6.3 V for 1 minute.

Comparative Examples 30 to 32

Into a nickel-made crucible, 2,000 g of potassium fluoroniobate thoroughly dried in a vacuum at 80°C and sodium in a molar amount of 10 times the potassium fluoroniobate were charged and allowed to perform a reduction reaction at 1, 000°C for 20 hours in an argon atmosphere. After the completion of reaction, the reduction product was cooled, washed with water, washed with 95% sulfuric acid and then with water in sequence, dried in a vacuum and pulverized for 40 hours using a ball mill of an alumina pot containing silica alumina balls. The pulverized product was dipped and stirred in a 3:2 (by mass) mixed solution of 50% nitric acid and 10% aqueous hydrogen peroxide. Thereafter, the pulverized product was thoroughly washed with water until the pH reached 7 to remove impurities, and dried in a vacuum. The manufactured niobium powder had a mean particle size of 1.3 $\mu$m. Into an SUS 304-made reactor, 30 g of the thus-obtained niobium powder was charged and thereinto, nitrogen was continuously introduced at 300°C for 0.5 to 4 hours to obtain niobium nitrides. The nitrogen amount of each nitride was determined using the nitrogen amount measuring apparatus manufactured by LECO which determines the nitrogen amount from the thermal conductivity. The ratio of the measured value to the separately measured mass of powder was designated as the nitrided amount, as a result, the nitrided amount here was from 0.02 to 0.30% by mass. Each niobium nitride was granulated, molded and sintered in the same manner as in Example 1 to obtain a sintered body.

The thus-obtained 50 units of sintered bodies each was electrochemically formed using an aqueous 0.1% phosphoric acid solution at a voltage of 20 V for 200 minutes to form an oxide dielectric film on the surface. Thereafter, an operation of dipping the sintered body in an aqueous 60% manganese nitrate solution and then heating it at 220°C for 30 minutes was repeated to form a manganese dioxide layer as the other electrode (counter electrode) layer on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 22. The LC value is a value measured at room temperature by applying a voltage of 6.3 V for 1 minute.

Comparative Examples 33 to 35

In an SUS 304-made reactor, 50 g of a niobium ingot was placed and thereinto, hydrogen was continuously introduced at 400°C for 12 hours. After cooling, the hydrogenated niobium cake was placed in an SUS 304-made pot containing iron-made balls and pulverized for 10 hours. This pulverized product was charged into the same SUS 304-made reactor as above and again hydrogenated under the above-described conditions. Thereafter, this hydride was formed into a 20 vol% slurry with water, charged together with zirconia balls into an SUS 304-made wet grinding machine ("Atritor", trade name), and wet-pulverized for 6 hours. The resulting slurry was subjected to centrifugal sedimentation and decanted to obtain a pulverized product. The pulverized product was dried in a vacuum of $1.33 \times 10^2$ Pa at 50°C.

Subsequently, the hydrogenated niobium powder was dehydrogenated under heating in a vacuum of $1.33\times10^{-2}$ Pa at 400°C for 1 hour. The manufactured niobium powder had a mean particle size of 1.0 μm. Into an SUS 304-made reactor, 30 g of the obtained niobium powder was charged and thereinto, nitrogen was continuously introduced at 300°C for 0.5 to 3 hours to obtain niobium nitrides. The nitrogen amount of each nitride was determined using a nitrogen amount measuring apparatus manufactured by LECO which determines the nitrogen amount from the thermal conductivity. The ratio of the measured value to the separately measured mass of powder was designated as the nitrided amount, as a result, the nitrided amount here was from 0.03 to 0.28% by mass. Each niobium nitride was granulated, molded and sintered in the same manner as in Example 94 to obtain a sintered body.

The thus-obtained 50 units of sintered bodies each was electrochemically formed using an aqueous 0.1% phosphoric acid solution at a voltage of 20 V for 200 minutes to form an oxide dielectric film on the surface. Thereafter, an operation of contacting the oxide dielectric film with an equivalent-mass mixed solution of an aqueous 10% ammonium persulfate solution and an aqueous 0.5% anthraquinone sulfonic acid solution and then with a pyrrole vapor was repeated at least 5 times, whereby the other electrode (counter electrode) comprising polypyrrole was formed on the oxide dielectric film. On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 22. The LC value is a value measured at room temperature by applying a voltage of 6.3 V for 1 minute.

TABLE 22

| | Nitrogen Content (wt%) | Capacitance (μF) | LC (μA) | Number of Units Having LC in Excess of 100 μA |
|---|---|---|---|---|
| Example 140 | - | 502 | 17 | 0/50 |
| Example 141 | - | 689 | 39 | 0/50 |
| Example 142 | - | 473 | 16 | 0/50 |
| Example 143 | - | 507 | 15 | 0/50 |
| Example 144 | - | 447 | 18 | 0/50 |
| Example 145 | - | 1058 | 83 | 0/50 |
| Example 146 | 0.45 | 558 | 15 | 0/50 |
| Example 147 | - | 468 | 20 | 0/50 |
| Example 148 | - | 497 | 14 | 0/50 |
| Example 149 | - | 474 | 22 | 0/50 |
| Example 150 | - | 483 | 19 | 0/50 |
| Example 151 | - | 498 | 20 | 0/50 |
| Example 152 | 0.28 | 544 | 16 | 0/50 |
| Example 153 | - | 473 | 19 | 0/50 |
| Comparative Example 30 | 0.02 | 399 | 46 | 1/50 |
| Comparative Example 31 | 0.09 | 393 | 42 | 1/50 |
| Comparative Example 32 | 0.30 | 384 | 30 | 0/50 |
| Comparative Example 33 | 0.03 | 454 | 48 | 1/50 |
| Comparative Example 34 | 0.14 | 449 | 44 | 0/50 |
| Comparative Example 35 | 0.28 | 459 | 40 | 0/50 |

Example 154 (Reference only)

Using 184 g of a niobium ingot and 2.8 g of lanthanum powder, a lanthanum-containing niobium ingot (alloy) having a lanthanum content of 1 mol% was produced by arc melting. In an SUS 304-made reactor, 50 g of the obtained ingot was placed and hydrogen was continuously introduced thereinto at 400°C for 10 hours. After cooling, the hydrogenated lanthanum-containing' niobium cake was placed in an SUS 304-made pot containing SUS-made balls and

pulverized for 10 hours. Thereafter, this hydride was formed into a 20 vol% slurry with water, charged together with zirconia balls into an SUS 304-made spike mill, and wet-pulverized for 7 hours. The resulting slurry was subjected to centrifugal sedimentation and decanted to obtain a pulverized product. The pulverized product was dried under reduced pressure in the conditions of $1.33\times10^{2}$ Pa and 50°C.

Subsequently, the hydrogenated lanthanum-containing niobium powder was dehydrogenated under heating at $1.33\times10^{-2}$ Pa and 400°C for 1 hour. The produced lanthanum-containing niobium powder had a mean particle size of 1.0 μm and the lanthanum content thereof was 1 mol%. The thus-obtained lanthanum-containing niobium powder was granulated under reduced pressure of $4\times10^{-3}$ Pa at 1, 100°C. Thereafter, the granulated cake was pulverized to obtain a granulated powder having a mean particle size of 100 μm.

The thus-obtained lanthanum-containing niobium granulated powder was molded together with a 0.3-mmϕ niobium lead wire to manufacture a molded article having a size of approximately 0.3×0.18×0.45 cm (weighing about 0.1 g).

This molded article was allowed to stand under reduced pressure of $4\times10^{-3}$ Pa at 1,200°C for 30 minutes and thereby, a sintered body was obtained. The sintered body obtained was electrochemically formed in an aqueous 0.1% phosphoric acid solution at a temperature of 80°C for 200 minutes by applying a voltage of 20 V to form a dielectric layer on the surface. Thereafter, the capacitance in 30% sulfuric acid and the leakage current (hereinafter simply referred to as "LC") in an aqueous 20% phosphoric acid solution were measured. The results obtained are shown in Table 23 (No.1 and No.2).

Examples 155 to 195 (Reference only)

In the above-described manufacture of a niobium sintered body comprising at least one element of rubidium, cesium, magnesium, strontium, barium, scandium, yttrium, lanthanum, praseodymium, samarium, europium, gadolinium, terbium, dysprosium, holmium, erbium, thulium, ytterbium, lutetium, hafnium, vanadium, osmium, iridium, platinum, gold, cadmium, mercury, lead, sulfur, selenium and tellurium, a powder of rubidium, cesium, magnesium, strontium, barium, scandium, yttrium, lanthanum, praseodymium, samarium, europium, gadolinium, terbium, dysprosium, holmium, erbium, thulium, ytterbium, lutetium, hafnium, vanadium, osmium, iridium, platinum, gold, cadmium, mercury, lead, sulfur, selenium or tellurium and a niobium powder were used at an arbitrary ratio to produce niobium ingots containing at least one element of rubidium, cesium, magnesium, strontium, barium, scandium, yttrium, lanthanum, praseodymium, samarium, europium, gadolinium, terbium, dysprosium, holmium, erbium, thulium, ytterbium, lutetium, hafnium, vanadium, osmium, iridium, platinum, gold, cadmium, mercury, lead, sulfur, selenium and tellurium by arc melting. Thereafter, 500 g of each ingot was pulverized using the same apparatus as in Example 154 by changing the pulverization time. Using the thus-obtained niobium powder containing at least one element selected from the group consisting of rubidium, cesium, magnesium, strontium, barium, scandium, yttrium, lanthanum, praseodymium, samarium, europium, gadolinium, terbium, dysprosium, holmium, erbium, thulium, ytterbium, lutetium, hafnium, vanadium, osmium, iridium, platinum, gold, cadmium, mercury, lead, sulfur, selenium and tellurium, sintered bodies were manufactured and each was measured on the capacitance and LC. The results obtained are shown in Table 23(No.1 and No.2).

Comparative Examples 36 to 39 (Reference only)

For the purpose of comparison with Examples 154 to 195, four kinds of niobium powder not containing any of rubidium, cesium, magnesium, strontium, barium, scandium, yttrium, lanthanum, praseodymium, samarium, europium, gadolinium, terbium, dysprosium, holmium, erbium, thulium, ytterbium, lutetium, hafnium, vanadium, osmium, iridium, platinum, gold, cadmium, mercury, lead, sulfur, selenium and tellurium and having a different mean particle size were produced in the same manner as in Example 154. Using the produced niobium powder, sintered bodies were manufactured and measured on the capacitance and LC. The results obtained are shown in Table 23(No.1 and No.2).

Table 23 (No.1)

| | Composition | | Mean Particle Size (μm) | Capacitance (μF•V/g) | LC (μA/g) |
|---|---|---|---|---|---|
| | Element | Molar Ratio | | | |
| Example 154 | Nb:La | 99:1 | 1.0 | 108000 | 21 |
| Example 155 | Nb:La | 99:1 | 0.5 | 228000 | 125 |
| Example 156 | Nb:La | 99:1 | 0.7 | 151000 | 55 |
| Example 157 | Nb:La | 99:1 | 1.3 | 92000 | 11 |

(continued)

| | Composition | | Mean Particle Size (μm) | Capacitance (μF•V/g) | LC (μA/g) |
|---|---|---|---|---|---|
| | Element | Molar Ratio | | | |
| Example 158 | Nb:Sc | 99.9:0.1 | 1.0 | 106000 | 36 |
| Example 159 | Nb:Y | 97:3 | 1.0 | 106000 | 23 |
| Example 160 | Nb:Pr | 99:1 | 1.0 | 105000 | 32 |
| Example 161 | Nb:Sm | 99:1 | 1.0 | 107000 | 37 |
| Example 162 | Nb:Eu | 99.5:0.5 | 1.0 | 104000 | 39 |
| Example 163 | Nb:Gd | 98.5:1.5 | 1.0 | 103000 | 40 |
| Example 164 | Nb:Tb | 99.8:0.2 | 1.0 | 105000 | 41 |
| Example 165 | Nb:Dy | 99:1 | 1.0 | 107000 | 39 |
| Example 166 | Nb:Ho | 99:7:0.3 | 1.0 | 106000 | 44 |
| Example 167 | Nb:Er | 99.5:0.5 | 1.0 | 106000 | 25 |
| Example 168 | Nb:Tm | 99.8:0.2 | 1.0 | 103000 | 37 |
| Example 169 | Nb:Yb | 97:3 | 1.0 | 105000 | 26 |
| Example 170 | Nb:Lu | 95:5 | 1.0 | 104000 | 27 |
| Example 171 | Nb:Hf | 93:7 | 1.0 | 105000 | 35 |
| Example 172 | Nb:V | 99.9:0.1 | 1.0 | 109000 | 48 |
| Example 173 | Nb:Os | 99.9:0.1 | 1.0 | 107000 | 43 |
| Example 174 | Nb:Ir | 99.9:0.1 | 1.0 | 107000 | 44 |
| Example 175 | Nb:Pt | 99.8:0.2 | 1.0 | 102000 | 37 |
| Example 176 | Nb:Au | 99.8:0.2 | 1.0 | 101000 | 41 |
| Example 177 | Nb:Cd | 99.7:0.3 | 1.0 | 109000 | 35 |
| Example 178 | Nb:Hg | 99.9:0.1 | 1.0 | 101000 | 43 |
| Example 179 | Nb:Pb | 99.9:0.1 | 1.0 | 102000 | 36 |
| Example 180 | Nb:S | 95:5 | 1.0 | 108000 | 35 |

TABLE 23 (No.2)

| | Composition | | Mean Particle size (μm) | Capacitance (μF•V/g) | LC (μA/g) |
|---|---|---|---|---|---|
| | Element | Molar Ratio | | | |
| Example 181 | Nb:Se | 99:1 | 1.0 | 108000 | 35 |
| Example 182 | Nb:Te | 98:2 | 1.0 | 107000 | 28 |
| Example 183 | Nb:Hf:Lu | 92.9:7:0.1 | 0.7 | 145000 | 75 |
| Example 184 | Nb:Cs | 99.95:0.05 | 0.7 | 153000 | 120 |
| Example 185 | Nb:Y:Mg | 97.99:2:0.01 | 0.7 | 150000 | 81 |
| Example 186 | Nb:Er:Sr | 95.9:4:0.1 | 0.7 | 146000 | 132 |
| Example 187 | Nb:Yb:Ba | 96.9:3:0.1 | 0.7 | 151000 | 143 |
| Example 188 | Nb:La:Hf | 93:1:6 | 0.5 | 210000 | 133 |
| Example 189 | Nb:Y:La: Lu | 97.5:1:1:0.5 | 0.5 | 225000 | 156 |

(continued)

| | Composition | | Mean Particle size (μm) | Capacitance (μF•V/g) | LC (μA/g) |
|---|---|---|---|---|---|
| | Element | Molar Ratio | | | |
| Example 190 | Nb:La:Er :Yb | 96.5:2:0.5:1 | 0.5 | 208000 | 161 |
| Example 191 | Nb:Hf:Te | 93:1:5:1 | 0.5 | 213000 | 171 |
| Example 192 | Nb:Y:Os: Ir | 96.5:2:0.5:1 | 1.0 | 107000 | 45 |
| Example 193 | Nb:La:Cd :S | 93.4:1.5:0.1:5 | 1.0 | 106000 | 39 |
| Example 194 | Nb:Er:Hf :Te | 95:0.5:4:0.5 | 0.7 | 154000 | 66 |
| Example 195 | Nb:Gd:Yb :Lu:Se | 98:0.5:0.5:0.5:0.5 | 0.7 | 143000 | 78 |
| Comp. Example 36 | Nb | 100 | 0.5 | 182000 | 2120 |
| Comp. Example 37 | Nb | 100 | 0.7 | 120000 | 1074 |
| Comp. Example 38 | Nb | 100 | 1.0 | 87000 | 424 |
| Comp. Example 39 | Nb | 100 | 1.3 | 74000 | 233 |

Examples 196 to 202 (Reference only)

In order to change the lanthanum content of the lanthanum-containing niobium powder, lanthanum-containing niobium ingots having a lanthanum content of 0.01 to 20 mol% were produced by varying the amounts of niobium and lanthanum processed by the arc melting. Thereafter, using 500 g of each of the lanthanum-containing niobium ingots having respective lanthanum concentrations, sintered bodies were manufactured by the same operation as in Example 154 and each was measured on the capacitance and LC. The results obtained are shown in Table 24.

TABLE 24

| | Lanthanum Content (mol%) | Mean Particle Size (μm) | Sintering Temp. (°C) | Capacitance (μF•V/g) | LC (μA/g) |
|---|---|---|---|---|---|
| Comp. Example 38 | 0.00 | 1.0 | 1200 | 87000 | 424 |
| Example 196 | 0.01 | 1.0 | 1200 | 95000 | 65 |
| Example 197 | 0.1 | 1.0 | 1200 | 106000 | 33 |
| Example 154 | 1 | 1.0 | 1200 | 108000 | 21 |
| Example 198 | 2 | 1.0 | 1200 | 110000 | 23 |
| Example 199 | 3 | 1.0 | 1200 | 109000 | 23 |
| Example 200 | 7 | 1.0 | 1200 | 109000 | 30 |
| Example 201 | 11 | 1.0 | 1200 | 85000 | 59 |
| Example 202 | 20 | 1.0 | 1200 | 79000 | 66 |

Examples 203 to 207 (Reference only)

In an SUS 304-made reactor, 1,000 g of a niobium ingot was placed and hydrogen was continuously introduced thereinto at 400°C for 10 hours. After cooling, the hydrogenated niobium cake was placed in an SUS 304-made pot containing SUS-made balls and pulverized for 10 hours. Thereafter, this hydride was formed into a 20 vol% slurry with water, charged together with zirconia balls into an SUS 304-made spike mill, and wet-pulverized for 7 hours. The resulting slurry was subjected to centrifugal sedimentation and decanted to obtain a pulverized product. The pulverized product

was dried under reduced pressure in the conditions of $1.3\times10^2$ Pa and 50°C. Subsequently, the hydrogenated niobium powder was dehydrogenated under heating at $1.3\times10^{-2}$ Pa and 400°C for 1 hour. The manufactured niobium powder had a mean particle size of 1.0μm. Into this niobium powder, any one of lanthanum oxide, lanthanum oxalate, hydrogenated lanthanum, lanthanum nitrate and lanthanum (metal) each having a mean particle size of about 1 μm was mixed at an arbitrary ratio. The obtained lanthanum-containing niobium powder was granulated under reduced pressure of $4\times10^{-3}$ Pa at 1,050°C. Thereafter, the granulated cake was pulverized to obtain a granulated powder having a mean particle size of 90 μm. The thus-obtained lanthanum-containing niobium granulated powder was molded together with a 0.3-mmϕ niobium wire to manufacture a molded article having a size of approximately 0.3×0.18×0.45 cm (weighing about 0.1g). Subsequently, these molded articles were allowed to stand under reduced pressure of $4\times10^{-3}$ Pa at 1,250°C for 30 minutes to obtain sintered bodies. The resulting sintered bodies each was electrochemically formed in an aqueous 0.1% phosphoric acid solution at a temperature of 80°C for 200 minutes by applying a voltage of 20 V to form a dielectric layer on the surface. Thereafter, the capacitance in 30% sulfuric acid and the LC in an aqueous 20% phosphoric acid solution were measured. The results obtained are shown in Table 25.

TABLE 25

| | Species of Lanthanum | Lanthanum Content (mol%) | Capacitance (μF•V/g) | LC (μA/ g) |
|---|---|---|---|---|
| Example 203 | lanthanum oxide | 0.5 | 109000 | 29 |
| Example 204 | lanthanum oxalate | 1.2 | 112000 | 23 |
| Example 205 | hydrogenated lanthanum | 3.5 | 113000 | 22 |
| Example 206 | lanthanum nitrate | 0.8 | 108000 | 29 |
| Example 207 | lanthanum | 1.1 | 108000 | 26 |

Examples 208 to 212 (Reference only)

In order to obtain a lanthanum-containing niobium nitride, 10 g of lanthanum-containing niobium powder containing 0.9 mol% of lanthanum and having a mean particle size of 0. 9 μm was manufactured in the same manner as in Example 154 and charged into an SUS 304-made reactor and thereinto, nitrogen was continuously introduced at 300°C for 0.5 to 20 hours to obtain lanthanum-containing niobium nitrides. The nitrogen amount of each nitride was determined using a nitrogen amount measuring apparatus manufactured by LECO which determines the nitrogen amount from the thermal conductivity. The ratio of the measured value to the separately measured mass of powder was designated as the nitrided amount. The nitrided amount here was from 0.02 to 0.81% by mass.

The thus-obtained lanthanum-containing niobium nitrides each was granulated, molded and sintered in the same manner as in Example 154 and each sintered body obtained was electrochemically formed in an aqueous 0.1% phosphoric acid solution at a temperature of 80°C for 200 minutes by applying a voltage of 20 V to form a dielectric layer on the surface. Thereafter, the capacitance in 30% sulfuric acid and the LC value in an aqueous 20% phosphoric acid solution were measured. The results obtained are shown in Table 26.

TABLE 26

| | Lanthanum Content (mol%) | Nitrogen Content (mass %) | Capacitance (μF•V/g) | LC (μA/g) |
|---|---|---|---|---|
| Example 208 | 0.9 | 0.02 | 120000 | 29 |
| Example 209 | 0.9 | 0.12 | 122000 | 19 |
| Example 210 | 0.9 | 0.26 | 121000 | 19 |
| Example 211 | 0.9 | 0.45 | 124000 | 23 |
| Example 212 | 0.9 | 0.81 | 120000 | 24 |

Examples 213 to 215 (Reference only)

In order to obtain a sintered body comprising a mixture of lanthanum-containing niobium powder and niobium powder, a lanthanum-containing niobium powder containing 10 mol% of lanthanum and having a mean particle size of 1.0 μm was obtained in the same manner as in Example 154.

Separately, into a nickel-made crucible, 2,000 g of potassium fluoroniobate thoroughly dried under reduced

pressure at 80°C and sodium in a molar amount of 10 times the potassium fluoroniobate were charged and allowed to perform a reduction reaction at 1,000°C for 20 hours in an argon atmosphere. After the completion of reaction, the reduction product was cooled, washed with water, washed with 95% sulfuric acid and then with water in sequence, dried under reduced pressure and pulverized for 40 hours using a ball mill of an alumina pot containing silica alumina balls. The pulverized product was dipped and stirred in a 3:2 (by mass) mixed solution of 50% nitric acid and 10% aqueous hydrogen peroxide. Thereafter, the pulverized product was thoroughly washed with water until the pH reached 7 to remove impurities, and dried under reduced pressure. The produced niobium powder had a mean particle size of 1.2 μm.

The thus-obtained lanthanum-containing niobium powder was thoroughly mixed with niobium powder at a ratio shown in Table 27 and the resulting mixtures each was granulated, molded and sintered in the same manner as in Example 154 to obtain sintered bodies. The capacitance and the LC value of each sintered body were measured and the results obtained are shown in Table 27.

Examples 216 to 218 (Reference only)

In order to obtain a sintered body of lanthanum-containing niobium nitride comprising a mixture of lanthanum-containing niobium powder and niobium powder, lanthanum-containing niobium powder containing 10 mol% of lanthanum and having a mean particle size of 1.0 μm was obtained in the same manner as in Example 1. Separately, 50 g of a niobium ingot was placed in an SUS 304-made reactor and hydrogen was continuously introduced thereinto at 400°C for 12 hours. After cooling, the hydrogenated niobium cake was placed in an SUS 304-made pot containing iron-made balls and pulverized for 10 hours. This pulverized product was charged into the same SUS 304-made reactor as above and again hydrogenated under the above-described conditions. Thereafter, this hydride was formed into a 20 vol% slurry with water, charged together with zirconia balls into an SUS 304-made spike mill, and wet-pulverized for 6 hours.

The resulting slurry was subjected to centrifugal sedimentation and decanted to obtain a pulverized product. The pulverized product was dried under reduced pressure in the conditions of $1.3 \times 10^2$ Pa and 50°C. Subsequently, the hydrogenated niobium powder was dehydrogenated under heating under reduced pressure of $1.33 \times 10^{-2}$ Pa at 400°C for 1 hour. The manufactured niobium powder had a mean particle size of 1.1 μm.

The thus-obtained lanthanum-containing niobium powder was thoroughly mixed with niobium powder at an arbitrary ratio and after obtaining nitrides in the same manner as in Example 210, the nitrides each was granulated, molded and sintered to obtain sintered bodies. The capacitance and the LC value of each sintered body were measured and the results obtained are shown in Table 27.

TABLE 27

| | Mixing ratio (lanthanum-con taining niobium powder : niobium powder) | Capacitance (μF•V/g) | LC (μA/g) |
|---|---|---|---|
| Example 213 | 90:10 | 91000 | 41 |
| Example 214 | 50:50 | 102000 | 30 |
| Example 215 | 10:90 | 108000 | 22 |
| Example 216 | 80:20 | 94000 | 34 |
| Example 217 | 40:60 | 102000 | 25 |
| Example 218 | 20:80 | 108000 | 19 |

Examples 219 and 220 (Reference only)

50 Units of sintered bodies were prepared in each of Example 219 and Example 220 in same manner as in Example 154 and Example 182, respectively. These sintered bodies each was electrochemically oxidized using an aqueous 0.1% phosphoric acid solution at a voltage of 20 V for 6 hours to form an oxide dielectric film on the surface. Subsequently, an operation of dipping each sintered body in an aqueous 60% manganese nitrate solution and then heating it at 220°C for 30 minutes was repeated to form a manganese dioxide layer as the other electrode (counter electrode) layer on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 28. The LC value is a value measured at room temperature by applying a voltage of 6.3 V for 1 minute.

Examples 221 and 222 (Reference only)

50 Units of sintered bodies were prepared in each of Example 221 and Example 222 in same manner as in Example 159 and Example 204, respectively. These sintered bodies each was electrochemically oxidized using an aqueous 0.1% phosphoric acid solution at a voltage of 20 V for 6 hours to form an oxide dielectric film on the surface. Subsequently, an operation of dipping each sintered body in a mixed solution of an aqueous 35% lead acetate solution and an aqueous 35% ammonium persulfate solution (1:1 by volume) and then allowing the reaction to proceed at 40°C for 1 hour was repeated to form a mixed layer of lead dioxide and lead sulfate as the other electrode (counter electrode) layer on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 28. The LC value is a value measured at room temperature by applying a voltage of 6.3 V for 1 minute.

Examples 223 to 226 (Reference only)

50 Units of sintered bodies were prepared in each of Example 223, Example 224, Example 225 and Example 226 in same manner as in Example 167, Example 189, Example 211 and Example 215, respectively. These sintered bodies each was electrochemically oxidized using an aqueous 0.1% phosphoric acid solution at a voltage of 20 V for 6 hours to form an oxide dielectric film on the surface. Subsequently, an operation of contacting the oxide dielectric film with an equivalent-mass mixed solution of an aqueous 10% ammonium persulfate solution and an aqueous 0.5% anthraquinone-sulfonic acid solution and then with a pyrrole vapor was repeated at least 5 times, whereby the other electrode (counter electrode) comprising polypyrrole was formed on the oxide dielectric film.

On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 28. The LC value is a value measured at room temperature by applying a voltage of 6.3 V for 1 minute.

Examples 227 to 231 (Reference only)

50 Units of sintered bodies were prepared in each of Example 227, Example 228, Example 229, Example 230 and Example 231 in same manner as in Example 170, Example 191, Example 205, Example 210 and Example 218, respectively. These sintered bodies each was electrochemically oxidized using an aqueous 0.1% phosphoric acid solution at a voltage of 20 V for 6 hours to form an oxide dielectric film on the surface. Subsequently, the niobium sintered body was dipped into an aqueous solution containing 25% by mass of ammonium persulfate (Solution 1), then pulled up and dried at 80°C for 30 minutes. Thereafter, the sintered body having formed thereon a dielectric material was dipped in an isopropanol solution containing 18% by mass of 3,4-ethylenedioxythiophene (Solution 2), then pulled up and left standing in an atmosphere of 60°C for 10 minutes to allow the oxidation-polymerization to proceed. The resulting sintered body was again dipped in Solution 1 and then treated in the same manner as above. The operation from the dipping in Solution 1 until the oxidation polymerization was repeated 8 times. Then, the sintered body was washed with hot water at 50°C for 10 minutes and dried at 100°C for 30 minutes, whereby the other electrode (counter electrode) comprising electrically conducting poly(3,4-ethylenedioxythiophene) was formed.

On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 28. The LC value is a value measured at room temperature by applying a voltage of 6.3 V for 1 minute.

Comparative Examples 40 to 42 (Reference only)

Into a nickel-made crucible, 2,000 g of potassium fluoroniobate thoroughly dried under reduced pressure at 80°C and sodium in a molar amount of 10 times the potassium fluoroniobate were charged and allowed to perform a reduction reaction at 1, 000°C for 20 hours in an argon atmosphere. After the completion of reaction, the reduction product was cooled, washed with water, washed with 95% sulfuric acid and then with water in sequence, dried under reduced pressure and pulverized for 40 hours using a ball mill of an alumina pot containing silica alumina balls. The pulverized product was dipped and stirred in a 3:2 (by mass) mixed solution of 50% nitric acid and 10% aqueous hydrogen peroxide. Thereafter, the pulverized product was thoroughly washed with water until the pH reached 7 to remove impurities, and dried under reduced pressure. The manufactured niobium powder had a mean particle size of 1.3 μm. Into an SUS 304-made reactor, 30 g of the thus-obtained niobium powder was charged and thereinto, nitrogen was continuously introduced at 300°C for 0.5 to 4 hours to obtain niobium nitrides. The nitrogen amount of each nitride was determined using the nitrogen amount measuring apparatus manufactured by LECO which determines the nitrogen amount from the thermal conductivity. The ratio of the measured value to the separately measured mass of powder was designated as the nitrided amount, as a result, the nitrided amount here was from 0.02 to 0.30% by mass. Each niobium nitride was granulated, molded and sintered in the same manner as in Example 154 to obtain a sintered body. The thus-obtained 50 units of sintered bodies each was electrochemically oxidized using an aqueous 0.1% phosphoric acid solution at a voltage of 20 V for 6 hours to form an oxide dielectric film on the surface. Thereafter, an operation of dipping the sintered body in an aqueous 60% manganese nitrate solution and then heating it at 220°C for 30 minutes was repeated to form a manganese dioxide layer as the other electrode (counter electrode) layer on the oxide dielectric film. On this counter electrode layer, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 28. The LC value is a value measured at room temperature by applying a voltage of 6.3 V for 1 minute.

Comparative Examples 43 to 45 (Reference only)

In an SUS 304-made reactor, 50 g of a niobium ingot was placed and thereinto, hydrogen was continuously introduced at 400°C for 12 hours. After cooling, the hydrogenated niobium cake was placed in an SUS 304-made pot containing iron-made balls and pulverized for 10 hours. This pulverized product was charged into the same SUS 304-made reactor as above and again hydrogenated under the above-described conditions. Thereafter, this hydride was formed into a 20 vol% slurry with water, charged together with zirconia balls into an SUS 304-made wet grinding machine ("Atritor", trade name), and wet-pulverized for 6 hours. The resulting slurry was subjected to centrifugal sedimentation and decanted to obtain a pulverized product. The pulverized product was dried under reduced pressure of $1.33 \times 10^2$ Pa at 50°C. Subsequently, the hydrogenated niobium powder was dehydrogenated under heating under reduced pressure of $1.33 \times 10^{-2}$ Pa at 400°C for 1 hour. The manufactured niobium powder had a mean particle size of 1.0 μm. Into an SUS 304-made reactor, 30 g of the obtained niobium powder was charged and thereinto, nitrogen was continuously introduced at 300°C for 0.5 to 3 hours to obtain niobium nitrides. The nitrogen amount of each nitride was determined using a nitrogen amount measuring apparatus manufactured by LECO which determines the nitrogen amount from the thermal conductivity. The ratio of the measured value to the separately measured mass of powder was designated as the nitrided amount, as a result, the nitrided amount here was from 0.03 to 0.28% by mass. Each niobium nitride was granulated, molded and sintered in the same manner as in Example 154 to obtain a sintered body. The thus-obtained 50 units of sintered bodies each was electrochemically oxidized using an aqueous 0.1% phosphoric acid solution at a voltage of 20 V for 6 hours to form an oxide dielectric film on the surface. Thereafter, an operation of contacting the oxide dielectric film with an equivalent-mass mixed solution of an aqueous 10% ammonium persulfate solution and an aqueous 0.5% anthraquinone sulfonic acid solution and then with a pyrrole vapor was repeated at least 5 times, whereby the other electrode (counter electrode) comprising polypyrrole was formed on the oxide dielectric film. On this counter electrode, a carbon layer and a silver paste layer were stacked in this order. After mounting a lead frame thereon, the device as a whole was molded with an epoxy resin to manufacture a chip-type capacitor. The average capacitance and the average LC value of the chip-type capacitors (n=50 units in each Example) are shown in Table 28. The LC value is a value measured at room temperature by applying a voltage of 6.3 V for 1 minute.

TABLE 28

| | Nitrogen Content (wt%) | Capacitance (μF) | LC (μA) | Number of Units Having LC in Excess of 100 μA |
|---|---|---|---|---|
| Example 219 | - | 486 | 15 | 0/50 |
| Example 220 | - | 471 | 20 | 0/50 |
| Example 221 | - | 482 | 16 | 0/50 |
| Example 222 | - | 504 | 17 | 0/50 |
| Example 223 | - | 480 | 18 | 0/50 |
| Example 224 | - | 1012 | 109 | 0/50 |
| Example 225 | 0.45 | 546 | 16 | 0/50 |
| Example 226 | - | 488 | 15 | 0/50 |
| Example 227 | - | 463 | 19 | 0/50 |

(continued)

| | Nitrogen Content (wt%) | Capacitance (μF) | LC (μA) | Number of Units Having LC in Excess of 100 μA |
|---|---|---|---|---|
| Example 228 | - | 937 | 119 | 0/50 |
| Example 229 | - | 509 | 15 | 0/50 |
| Example 230 | 0.26 | 532 | 12 | 0/50 |
| Example 231 | - | 491 | 13 | 0/50 |
| Comparative Example 40 | 0.02 | 398 | 47 | 4/50 |
| Comparative Example 41 | 0.08 | 392 | 41 | 3/50 |
| Comparative Example 42 | 0.30 | 383 | 40 | 0/50 |
| Comparative Example 43 | 0.03 | 455 | 47 | 2/50 |
| Comparative Example 44 | 0.15 | 444 | 43 | 0/50 |
| Comparative Example 45 | 0.28 | 460 | 41 | 0/50 |

Example 232 to 238, Comparative Example 46 to 48

Heat resistance of the capacitor were measured as follows.

50 units of the capacitors prepared in each examples and comparative examples shown in Table 29 was loaded on a multilayer substrate having a width of 1.5 mm with soldering. This substrate was passed through reflow furnace at 230°C with passing time of 30 seconds with three times repeating operation, and practical heat history (for example, heat history of three soldering: soldering for parts loaded on the surface of the substrate, soldering for parts loaded on the back side of the substrate, and soldering for parts loaded later on) was evaluated.

LC value of the capacitor before passing through the reflow furnace and after passing through the reflow furnace with three times were measured, and the average values and increasing rate (LC value after reflow operation / LC value before reflow operation) were shown in Table 29. As a result, the capacitor of the present invention had the LC increasing rate of being lower than 5 times, preferably lower than three times, and no capacitor had the LC value over 100μA.

TABLE 29

| | Capacitor Constitution<br>Species of Anode / Species of Cathode | Examples for producing a chip (Comp. Ex.) | LC value before reflow / after reflow (μA) | LC increasing rate | Number of Units Having LC in Excess of 100μA |
|---|---|---|---|---|---|
| Example 232* | Nb-W/$MnO_2$ | Example 34 | 25/55 | 2.2 times | 0/50 |
| Example 233* | Nb-B/$MnO_2$ | Example 81 | 17/39 | 2.3 times | 0/50 |
| Example 234* | Nb-B-Al /Polypyrrole | Example 86 | 23/51 | 2.2 times | 0/50 |
| Example 235 | Nb-Re-Zn-Ge/ Polythiophene | Example 148 | 14/35 | 2.3 times | 0/50 |
| Example 236* | Nb-Y/$PbO_2$ | Example 221 | 16/38 | 2.4 times | 0/50 |
| Example 237* | Nb-La/ Polythiophene | Example 230 | 12/30 | 2.5 times | 0/50 |
| Example 238 | Nb-Nd/ Polythiophene | * 1 | 21/39 | 1.9 times | 0/50 |

(continued)

| | Capacitor Constitution<br>Species of Anode / Species of Cathode | Examples for producing a chip (Comp. Ex.) | LC value before reflow / after reflow ($\mu$A) | LC increas ing rate | Number of Units Having LC in Excess of 100$\mu$A |
|---|---|---|---|---|---|
| Comp. Example 46 | $Nb/MnO_2$ | Comp. Example 40 | 47/277 | 5.9 times | 50/50 |
| Comp. Example 47 | $Nb/MnO_2$ | Comp. Example 42 | 40/208 | 5.2 times | 50/50 |
| Comp. Example 48 | Nb/Polypyrrole | Comp. Example 45 | 41/209 | 5.1 times | 50/50 |
| *1 A sintered body used was obtained by the same method as in Example 101, and a chip type capacitor was produced by the same method as in Example 148.<br>* Reference only | | | | | |

## Claims

1. A niobium powder for capacitors comprising at least one element selected from the group consisting of cerium, neodymium, rhenium, ruthenium, rhodium, palladium and silver, wherein said niobium powder has a mean particle size of 0.05 $\mu$m to 5 $\mu$m, wherein said elements are contained in a total amount of 0.01 to 10. mol% in said niobium powder.

2. The niobium powder for capacitors according to claim 1, wherein said niobium powder has a BET specific surface area of 0.5 to 40 $m^2$/g.

3. The niobium powder for capacitors as claimed in claim 1, further comprising at least one element selected from the group consisting of nitrogen, carbon, boron, and sulfur, preferably from the group consisting of nitrogen, carbon and sulfur.

4. The niobium powder for capacitors as claimed in claim 3, wherein the at least one element selected from the group consisting of nitrogen, carbon, boron and sulfur is contained in an amount of 200,000 ppm or less.

5. A niobium granulated product prepared by granulating the niobium powder according to any one of claims 1 to 4 to have a mean particle size of 10 $\mu$m to 500 $\mu$m.

6. A sintered body using said niobium powder as claimed in any one of claims 1 to 4, or said niobium granulated product as claimed in claim 5.

7. A capacitor comprising an electrode using said niobium sintered body as claimed in claim 6, a dielectric formed on a surface of said electrode, and a counter electrode formed on said dielectric.

8. The capacitor as claimed in claim 7, wherein said dielectric comprises niobium oxide as a main component.

9. The capacitor as claimed in claim 7, wherein said counter electrode comprises at least one material selected from the group consisting of an electrolytic solution, an organic semiconductor, and an inorganic semiconductor.

10. An electronic circuit using the capacitor described in any one of claims 7 to 9.

11. An electronic instrument using the capacitor described in any one of claims 7 to 9.

## Patentansprüche

1. Niobpulver für Kondensatoren, welches mindestens ein Element enthält, das aus der Gruppe ausgewählt ist, die aus Cer, Neodym, Rhenium, Ruthenium, Rhodium, Palladium und Silber besteht, wobei das Niobpulver eine mittlere Teilchengröße von 0,05 μm bis 5 μm aufweist, wobei die Elemente in einer Gesamtmenge von 0,01 bis 10 mol-% in dem Niobpulver enthalten sind.

2. Niobpulver für Kondensatoren nach Anspruch 1, wobei das Niobpulver eine spezifische Oberfläche nach BET von 0,5 bis 40 $m^2/g$ aufweist.

3. Niobpulver für Kondensatoren nach Anspruch 1, das außerdem mindestens ein Element enthält, das aus der Gruppe ausgewählt ist, die aus Stickstoff, Kohlenstoff, Bor und Schwefel besteht, und vorzugsweise aus der Gruppe ausgewählt ist, die aus Stickstoff, Kohlenstoff und Schwefel besteht.

4. Niobpulver für Kondensatoren nach Anspruch 3, wobei das mindestens eine Element, das aus der Gruppe ausgewählt ist, die aus Stickstoff, Kohlenstoff, Bor und Schwefel besteht, in einer Menge von 200000 ppm oder weniger enthalten ist.

5. Granuliertes Niobprodukt, hergestellt durch Granulieren des Niobpulvers nach einem der Ansprüche 1 bis 4 unter Bildung einer mittleren Teilchengröße von 10 μm bis 500 μm.

6. Sinterkörper unter Verwendung des Niobpulvers nach einem der Ansprüche 1 bis 4 oder des granulierten Niobprodukts nach Anspruch 5.

7. Kondensator, der eine Elektrode unter Einsatz des Niobsinterkörpers nach Anspruch 6, ein auf einer Oberfläche der Elektrode gebildetes Dielektrikum und eine auf dem Dielektrikum gebildete Gegenelektrode aufweist.

8. Kondensator nach Anspruch 7, wobei das Dielektrikum Nioboxid als Hauptkomponente enthält.

9. Kondensator nach Anspruch 7, wobei die Gegenelektrode mindestens ein Material aufweist, das aus der Gruppe ausgewählt ist, die aus einer Elektrolytlösung, einem organischen Halbleiter und einem anorganischen Halbleiter besteht.

10. Elektronischer Schaltkreis unter Einsatz des Kondensators nach einem der Ansprüche 7 bis 9.

11. Elektronisches Instrument unter Einsatz des Kondensators nach einem der Ansprüche 7 bis 9.

## Revendications

1. Poudre de niobium pour condensateurs comprenant au moins un élément choisi dans le groupe consistant en le cérium, le néodyme, le rhénium, le ruthénium, le rhodium, le palladium, et l'argent, où ladite poudre de niobium a une taille de particule moyenne de 0,05 μm à 5 μm, où lesdits éléments sont contenus en une quantité totale de 0,01 à 10 mol % dans ladite poudre de niobium.

2. Poudre de niobium pour condensateurs selon la revendication 1, où ladite poudre de niobium a une surface spécifique BET de 0,5 à 40 $m^2/g$.

3. Poudre de niobium pour condensateurs selon la revendication 1, comprenant en outre au moins un élément choisi dans le groupe consistant en l'azote, le carbone, le bore et le soufre, de préférence dans le groupe consistant en l'azote, le carbone et le soufre.

4. Poudre de niobium pour condensateurs selon la revendication 3, où le au moins un élément choisi dans le groupe consistant en l'azote, le carbone, le bore et le soufre est contenu en une quantité de 200 000 ppm ou moins.

5. Produit granulé en niobium préparé par granulation de la poudre de niobium selon l'une quelconque des revendications 1 à 4 pour avoir une taille de particule moyenne de 10 μm à 500 μm.

**6.** Corps fritté utilisant ladite poudre de niobium selon l'une quelconque des revendications 1 à 4, ou ledit produit granulé en niobium selon la revendication 5.

**7.** Condensateur comprenant une électrode utilisant ledit corps fritté en niobium selon la revendication 6, un diélectrique formé sur une surface de ladite électrode, et une contre-électrode formée sur ledit diélectrique.

**8.** Condensateur selon la revendication 7, où ledit diélectrique comprend de l'oxyde de niobium comme composant principal.

**9.** Condensateur selon la revendication 7, où ladite contre-électrode comprend au moins un matériau choisi dans le groupe consistant en une solution électrolytique, un semi-conducteur organique et un semi-conducteur inorganique.

**10.** Circuit électronique utilisant le condensateur décrit dans l'une quelconque des revendications 7 à 9.

**11.** Instrument électronique utilisant le condensateur décrit dans l'une quelconque des revendications 7 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 55157226 A
- US 4084965 A
- JP 10242004 A
- US 6051044 A
- DE 19847012 A1